# EUROPEAN PATENT APPLICATION

(11) **EP 3 054 718 A1**
(43) Date of publication of application: **10.08.2016**
(21) Application number: 13896297.2
(22) Date of filing: 31.10.2013
(51) Int. Cl.: H04W 24/02

(54) **WIRELESS COMMUNICATION METHOD AND DEVICE**

(71) Applicant: Huawei Technologies Co., Ltd., Longgang District Shenzhen, Guangdong 518129 (CN)
(72) Inventor: YANG, Meiying, Shenzhen Guangdong 518129 (CN); ZHENG, Juan, Shenzhen Guangdong 518129 (CN)
(74) Representative: Maiwald Patentanwalts GmbH
(86) International application number: PCT/CN2013/086298
(87) International publication number: WO 2015/062014

(57) **Abstract**

The present invention discloses a wireless communication method and apparatus, where the method includes: receiving a first listening result sent by user equipment UE, where the first listening result is obtained by the UE by performing interference listening on a to-be-listened-on spectrum, and the to-be-listened-on spectrum is an unlicensed spectrum; selecting an idle spectrum from the to-be-listened-on spectrum according to the first listening result; and communicating with the UE on the idle spectrum. In the technical solutions of the present invention, UE performs listening on a to-be-listened-on spectrum, so that an interference listening scope of a base station can be expanded, and a hidden node for the base station can be discovered. Therefore, the base station may select a suitable unlicensed spectrum to communicate with the UE, thereby reducing strength of possible interference caused to communication between the base station and the UE on the selected unlicensed spectrum.

## Description

### TECHNICAL FIELD

Embodiments of the present invention relate to communications technologies, and in particular, to a wireless communication method and apparatus.

### BACKGROUND

A spectrum is a basis of wireless communication. According to the latest released FCC (Federal Communications Commission, Federal Communications Commission) International Spectrum White Paper, unlicensed (unlicensed) spectrum resources are more than licensed spectrum resources. Therefore, if LTE (long term evolution, Long Term Evolution) user equipment is applied to an unlicensed spectrum, it may not only effectively make use of unlicensed spectrum resources, but also provide more effective wireless access to meet increasing requirements for mobile broadband services.

In an existing solution, a base station selects an idle spectrum resource from an unlicensed spectrum by means of network listening and according to a listening result, and performs data communication with UE on the unlicensed spectrum.

However, in a listening process of the base station, due to a limitation of a factor such as a geographical location, a hidden node for the base station exists. For example, when the UE is located in a common coverage area of the base station and another access point, and the base station is located beyond a coverage area of the access point and cannot listen to a signal sent by the access point, the access point becomes a hidden node for the base station. If the hidden node is sending data by using an unlicensed spectrum, and the used unlicensed spectrum is the same as the idle spectrum selected by the base station, data communication between the base station and the UE located in the common coverage area of the hidden node and the base station is severely interfered by the hidden node.

### SUMMARY

The present invention provides a wireless communication method and apparatus, so as to overcome a disadvantage in the prior art and reduce a degree of interference caused to communication between a base station and UE.

According to a first aspect, an embodiment of the present invention provides a listening configuration method, including:
generating, by a base station, listening configuration information, where the listening configuration information is used to configure user equipment UE to perform interference listening, the interference listening refers to energy detection on a to-be-listened-on spectrum, and the to-be-listened-on spectrum belongs to an unlicensed spectrum; and
sending, by the base station, the listening configuration information to the UE, where
the base station can use the unlicensed spectrum to communicate with the UE.

In a first possible implementation manner of the first aspect, the listening configuration information includes description information of the to-be-listened-on spectrum, and the description information of the to-be-listened-on spectrum includes time domain information and/or frequency domain information of the to-be-listened-on spectrum, so that the UE performs interference listening on the to-be-listened-on spectrum according to the description information of the to-be-listened-on spectrum.

In a second possible implementation manner of the first aspect, the listening configuration information includes a second listening result obtained by the base station by listening on an available spectrum, so that the UE determines description information of the to-be-listened-on spectrum according to the second listening result, and the available spectrum is an unlicensed spectrum that includes the to-be-listened-on spectrum.

With reference to the first aspect and the first or the second possible implementation manner of the first aspect, in a third possible implementation manner of the first aspect, the listening configuration information includes reporting configuration information used to indicate a resource occupied when the UE reports a first listening result, and the reporting configuration information includes at least one of time domain information, frequency domain information, and code domain information.

With reference to any one of the first aspect and the first to the third possible implementation manners of the first aspect, in a fourth possible implementation manner, the listening configuration information further includes listening time information; and
the listening time information is used to indicate a time at which the UE starts and/or stops performing interference listening on the to-be-listened-on spectrum; or
the listening time information is used to instruct the UE to perform, with a period of the listening time information, interference listening on the to-be-listened-on spectrum.

With reference to any one of the first aspect and the first to the third possible implementation manners of the first aspect, in a fifth possible implementation manner, the listening configuration information further includes information about a listening trigger condition, and the information about the listening trigger condition is used to instruct the UE to perform interference listening on the to-be-listened-on spectrum when quality of a currently used channel meets the trigger condition.

According to a second aspect, an embodiment of the present invention provides a wireless communication method, including:
receiving a first listening result sent by user equipment UE, where the first listening result is obtained by the UE by performing interference listening on a to-be-listened-on spectrum, and the to-be-listened-on spectrum is an unlicensed spectrum;
selecting an idle spectrum from the to-be-listened-on spectrum according to the first listening result; and
communicating with the UE on the idle spectrum.

In a first possible implementation manner of the second aspect, before the receiving a first listening result sent by the UE, the method further includes:
sending listening configuration information to the UE, so that the UE performs interference listening on the to-be-listened-on spectrum according to the listening configuration information.

With reference to the first possible implementation manner of the first aspect, in a second possible implementation manner of the second aspect, the sending listening configuration information to the UE includes:
sending the listening configuration information to the UE by using radio resource control RRC dedicated signaling, RRC broadcast signaling, Media Access Control MAC signaling, or physical layer signaling.

With reference to the first or the second possible implementation manner of the second aspect, in a third possible implementation manner of the second aspect, the listening configuration information includes description information of the to-be-listened-on spectrum; and
before the sending listening configuration information to the UE, the method further includes:
performing interference listening on an available spectrum to obtain a second listening result, where the available spectrum is an unlicensed spectrum that includes the to-be-listened-on spectrum; and
determining the description information of the to-be-listened-on spectrum according to the second listening result.

With reference to the first or the second possible implementation manner of the second aspect, in a fourth possible implementation manner of the second aspect, before the sending listening configuration information to the UE, the method further includes:
performing interference listening on an available spectrum to obtain a second listening result, where the available spectrum is an unlicensed spectrum that includes the to-be-listened-on spectrum; and
the sending listening configuration information to the UE, so that the UE performs interference listening on the to-be-listened-on spectrum according to the listening configuration information includes:
   sending, to the UE, the listening configuration information that includes the second listening result, so that the UE determines description information of the to-be-listened-on spectrum according to the second listening result.

With reference to any one of the first to the fourth possible implementation manners of the second aspect, in a fifth possible implementation manner of the second aspect, the listening configuration information includes reporting configuration information used to indicate a resource occupied when the UE reports the first listening result, and the reporting configuration information includes at least one of time domain information, frequency domain information, and code domain information; and
the receiving a first listening result sent by the UE includes:
receiving, on the resource corresponding to the reporting configuration information, the first listening result sent by the UE.

With reference to any one of the first to the fifth possible implementation manners of the second aspect, in a sixth possible implementation manner of the second aspect, the listening configuration information includes listening time information, and the listening time information is used to indicate a time at which the UE starts and/or stops performing interference listening on the to-be-listened-on spectrum, or the listening time information is used to instruct the UE to perform, with a period of the listening time information, interference listening on the to-be-listened-on spectrum;
or
before the receiving a first listening result sent by user equipment UE, the method further includes:
sending a trigger instruction to the UE, so that the UE starts performing interference listening on the to-be-listened-on spectrum after receiving the trigger instruction.

With reference to any one of the first to the fifth possible implementation manners of the second aspect, in a seventh possible implementation manner of the second aspect, the listening configuration information further includes information about a listening trigger condition, and the information about the listening trigger condition is used to instruct the UE to perform interference listening on the to-be-listened-on spectrum when quality of a currently used channel meets the trigger condition.

With reference to any one of the second aspect and the first to the seventh possible implementation manners of the second aspect, in an eighth possible implementation manner of the second aspect, the first listening result is energy information of an interfering signal on the to-be-listened-on spectrum; and
before the receiving a first listening result sent by user equipment UE, the method further includes:
sending, to the UE, information about a status of using the to-be-listened-on spectrum by a current base station, where the information about a status of using includes data scheduling information corresponding to a signal sent on the to-be-listened-on spectrum by the current base station, so that the UE determines, according to the information about a status of using the to-be-listened-on spectrum by the current base station, energy information of a signal sent by the current base station, and further determines, according to energy information obtained by listening on the to-be-listened-on spectrum and the energy information of the signal sent by the current base station, the energy information of the interfering signal on the to-be-listened-on spectrum to obtain the first listening result.

With reference to the eighth possible implementation manner of the second aspect, in a ninth possible implementation manner of the second aspect, the selecting an idle spectrum from the to-be-listened-on spectrum according to the first listening result includes:
selecting, from the to-be-listened-on spectrum according to the energy information of the interfering signal on the to-be-listened-on spectrum, a to-be-listened-on spectrum that meets a preset condition, where:
   the preset condition includes at least one of the following three items:
      a value of energy information of an interfering signal on a to-be-listened-on spectrum is less than a first preset value;
      a value of a signal to interference plus noise ratio SINR of a to-be-listened-on spectrum is greater than a second preset value, where the value of the SINR is a ratio of reference signal received power RSRP of a channel currently used by the UE to a value of energy information of an interfering signal on the to-be-listened-on spectrum; and
      a channel quality indicator CQI of a to-be-listened-on spectrum is greater than a third preset value, where a value of the CQI is corresponding to a ratio of RSRP of a channel currently used by the UE to a value of energy information of an interfering signal on the to-be-listened-on spectrum.

With reference to any one of the second aspect and the first to the seventh possible implementation manners of the second aspect, in a tenth possible implementation manner of the second aspect, the first listening result is description information of an idle spectrum selected by the UE, and the selecting an idle spectrum from the to-be-listened-on spectrum according to the first listening result includes:
determining the idle spectrum from the to-be-listened-on spectrum according to the description information of the idle spectrum selected by the UE, where:
   the description information of the idle spectrum selected by the UE is description information of a to-be-listened-on spectrum that meets a preset condition and that is selected from the to-be-listened-on spectrum by the UE according to energy information that is of an interfering signal on the to-be-listened-on spectrum and that is obtained by performing interference listening on the to-be-listened-on spectrum, and the preset condition includes at least one of the following three items:
      a value of energy information of an interfering signal on a to-be-listened-on spectrum is less than a first preset value;
      a value of a signal to interference plus noise ratio SINR of a to-be-listened-on spectrum is greater than a second preset value, where the value of the SINR is a ratio of reference signal received power RSRP of a channel currently used by the UE to a value of energy information of an interfering signal on the to-be-listened-on spectrum; and
      a channel quality indicator CQI of a to-be-listened-on spectrum is greater than a third preset value, where a value of the CQI is corresponding to a ratio of RSRP of a channel currently used by the UE to a value of energy information of an interfering signal on the to-be-listened-on spectrum.

According to a third aspect, an embodiment of the present invention provides another wireless communication method, including:
performing, by user equipment UE, interference listening on a to-be-listened-on spectrum to obtain a first listening result, where the to-be-listened-on spectrum belongs to an unlicensed spectrum; and
sending, by the UE, the first listening result to the base station, so that the base station selects, from the to-be-listened-on spectrum according to the first listening result, an idle spectrum to communicate with the UE.

In a first possible implementation manner of the third aspect, before the performing, by UE, interference listening on a to-be-listened-on spectrum, the method further includes:
receiving, by the user equipment UE, listening configuration information sent by the base station; and
the performing, by UE, interference listening on a to-be-listened-on spectrum includes:
   performing, by the UE, interference listening on the to-be-listened-on spectrum according to the listening configuration information.

With reference to the first possible implementation manner of the third aspect, in a second possible implementation manner of the third aspect, description information of the to-be-listened-on spectrum is preset on the UE, and the performing, by the UE, interference listening on the to-be-listened-on spectrum according to the listening configuration information includes:
performing, by the UE, interference listening on the to-be-listened-on spectrum according to the preset description information of the to-be-listened-on spectrum; or
the listening configuration information includes description information of the to-be-listened-on spectrum, and the performing, by the UE, interference listening on the to-be-listened-on spectrum according to the listening configuration information includes:
   performing, by the UE, interference listening on the to-be-listened-on spectrum according to the description information that is of the to-be-listened-on spectrum and in the listening configuration information.

With reference to the first possible implementation manner of the third aspect, in a third possible implementation manner of the third aspect, the listening configuration information includes a second listening result, the second listening result is obtained by the base station by listening on an available spectrum, and the available spectrum is an unlicensed spectrum that includes the to-be-listened-on spectrum; and
the performing, by the UE, listening on the to-be-listened-on spectrum according to the listening configuration information includes:
determining, by the UE, description information of the to-be-listened-on spectrum according to the second listening result in the listening configuration information; and
performing, by the UE, interference listening on the to-be-listened-on spectrum according to the description information of the to-be-listened-on spectrum.

With reference to any one of the first to the third possible implementation manners of the third aspect, in a fourth possible implementation manner of the third aspect, the listening configuration information further includes configuration information used to indicate a resource occupied when the UE sends the first listening result, and the configuration information includes at least one of time domain information, frequency domain information, and code domain information; and
the sending, by the UE, the first listening result to the base station specifically includes:
sending, by the UE on the resource corresponding to the configuration information, the first listening result to the base station.

With reference to any one of the first to the fourth possible implementation manners of the third aspect, in a fifth possible implementation manner of the third aspect, the listening configuration information further includes listening time information; and
the listening time information is used to indicate a time at which the UE starts and/or stops performing listening on the to-be-listened-on spectrum, and the performing, by the UE, listening on the to-be-listened-on spectrum according to the listening configuration information includes: starting and/or stopping performing, by the UE, interference listening on the to-be-listened-on spectrum according to the listening time information; or
the listening time information is used to instruct the UE to use the listening time information as a period, and the performing, by the UE, listening on the to-be-listened-on spectrum according to the listening configuration information includes: performing, by the UE with a period of the listening time information, interference listening on the to-be-listened-on spectrum.

With reference to any one of the first to the fourth possible implementation manners of the third aspect, in a sixth possible implementation manner of the third aspect, before the performing, by UE, interference listening on a to-be-listened-on spectrum, the method further includes:
receiving, by the UE, a trigger instruction sent by the base station and starting performing interference listening on the to-be-listened-on spectrum.

With reference to any one of the first to the fourth possible implementation manners of the third aspect, in a seventh possible implementation manner of the third aspect, the listening configuration information further includes information about a listening trigger condition; and
the performing, by the UE, listening on the to-be-listened-on spectrum according to the listening configuration information includes:
performing, by the UE when determining that quality of a currently used channel meets the trigger condition, interference listening on the to-be-listened-on spectrum.

With reference to any one of the third aspect and the first to the seventh possible implementation manners of the third aspect, in an eighth possible implementation manner of the third aspect, the first listening result is energy information of an interfering signal on the to-be-listened-on spectrum, and before the performing, by user equipment UE, listening on a to-be-listened-on spectrum, the method further includes:
receiving information that is sent by the base station and that is about a status of using the to-be-listened-on spectrum by the current base station, where the information about a status of using includes data scheduling information corresponding to a signal sent on the to-be-listened-on spectrum by the current base station; and
the performing, by UE, interference listening on a to-be-listened-on spectrum to obtain a first listening result includes:
   performing, by the UE, listening on a signal on the to-be-listened-on spectrum to obtain energy information of the signal on the to-be-listened-on spectrum, and determining, according to the information about a status of using the to-be-listened-on spectrum by the current base station, energy information of a signal sent by the base station; and
   determining, by the UE according to the energy information of the signal on the to-be-listened-on spectrum and the energy information of the signal sent by the base station, the energy information of the interfering signal on the to-be-listened-on spectrum to obtain the first listening result.

With reference to any one of the third aspect and the first to the seventh possible implementation manners of the third aspect, in a ninth possible implementation manner of the third aspect, the first listening result is description information of an idle spectrum selected by the UE, and the performing, by UE, interference listening on a to-be-listened-on spectrum to obtain a first listening result includes:
performing, by the UE, interference listening on the to-be-listened-on spectrum to obtain energy information of an interfering signal on the to-be-listened-on spectrum; and
selecting, by the UE from the to-be-listened-on spectrum according to the energy information of the interfering signal on the to-be-listened-on spectrum, an idle spectrum that meets a preset condition, and determining description information of the idle spectrum to obtain the first listening result, where:
   the preset condition includes at least one of the following three items:
      a value of energy information of an interfering signal on a to-be-listened-on spectrum is less than a first preset value;
      a value of a signal to interference plus noise ratio SINR of a to-be-listened-on spectrum is greater than a second preset value, where the value of the SINR is a ratio of reference signal received power RSRP of a channel currently used by the UE to a value of energy information of an interfering signal on the to-be-listened-on spectrum; and
      a channel quality indicator CQI of a to-be-listened-on spectrum is greater than a third preset value, where a value of the CQI is corresponding to a ratio of RSRP of a channel currently used by the UE to a value of energy information of an interfering signal on the to-be-listened-on spectrum.

According to a fourth aspect, an embodiment of the present invention provides a wireless communication apparatus, including:
a receiving module, configured to receive a first listening result sent by user equipment UE, where the first listening result is obtained by the UE by performing interference listening on a to-be-listened-on spectrum, and the to-be-listened-on spectrum is an unlicensed spectrum;
a selection module, configured to select an idle spectrum from the to-be-listened-on spectrum according to the first listening result; and
a communication module, configured to communicate with the UE on the idle spectrum.

In a first possible implementation manner of the fourth aspect, the apparatus further includes a first sending module, configured to: before the first listening result sent by the UE is received, send listening configuration information to the UE, so that the UE performs interference listening on the to-be-listened-on spectrum according to the listening configuration information.

With reference to the first possible implementation manner of the fourth aspect, in a second possible implementation manner of the fourth aspect, the first sending module is specifically configured to send the listening configuration information to the UE by using radio resource control RRC dedicated signaling, RRC broadcast signaling, Media Access Control MAC signaling, or physical layer signaling.

With reference to the first or the second possible implementation manner of the fourth aspect, in a third possible implementation manner of the fourth aspect, the listening configuration information includes description information of the to-be-listened-on spectrum; and
before sending the listening configuration information to the UE, the first sending module is further configured to:
perform interference listening on an available spectrum to obtain a second listening result, where the available spectrum is an unlicensed spectrum that includes the to-be-listened-on spectrum; and
determine the description information of the to-be-listened-on spectrum according to the second listening result.

With reference to the first or the second possible implementation manner of the fourth aspect, in a fourth possible implementation manner of the fourth aspect, before sending the listening configuration information to the UE, the first sending module is further configured to:
perform interference listening on an available spectrum to obtain a second listening result, where the available spectrum is an unlicensed spectrum that includes the to-be-listened-on spectrum; and
the first sending module is specifically configured to send, to the UE, the listening configuration information that includes the second listening result, so that the UE determines description information of the to-be-listened-on spectrum according to the second listening result.

With reference to any one of the first to the fourth possible implementation manners of the fourth aspect, in a fifth possible implementation manner of the fourth aspect, the listening configuration information includes reporting configuration information used to indicate a resource occupied when the UE reports the first listening result, and the reporting configuration information includes at least one of time domain information, frequency domain information, and code domain information; and
the receiving module is specifically configured to:
receive, on the resource corresponding to the reporting configuration information, the first listening result sent by the UE.

With reference to any one of the first to the fifth possible implementation manners of the fourth aspect, in a sixth possible implementation manner of the fourth aspect, the listening configuration information includes listening time information, and the listening time information is used to indicate a time at which the UE starts and/or stops performing interference listening on the to-be-listened-on spectrum, or the listening time information is used to instruct the UE to perform, with a period of the listening time information, interference listening on the to-be-listened-on spectrum;
or
before receiving the first listening result sent by the UE, the receiving module is further configured to:
send a trigger instruction to the UE, so that the UE starts performing interference listening on the to-be-listened-on spectrum after receiving the trigger instruction.

With reference to any one of the first to the fifth possible implementation manners of the fourth aspect, in a seventh possible implementation manner of the fourth aspect, the listening configuration information further includes information about a listening trigger condition, and the information about the listening trigger condition is used to instruct the UE to perform interference listening on the to-be-listened-on spectrum when quality of a currently used channel meets the trigger condition.

With reference to any one of the fourth aspect and the first to the seventh possible implementation manners of the fourth aspect, in an eighth possible implementation manner of the fourth aspect, the first listening result is energy information of an interfering signal on the to-be-listened-on spectrum; and
the apparatus further includes a second sending module, configured to: before the first listening result sent by the user equipment UE is received, send, to the UE, information about a status of using the to-be-listened-on spectrum by a current base station, where the information about a status of using includes data scheduling information corresponding to a signal sent on the to-be-listened-on spectrum by the current base station, so that the UE determines, according to the information about a status of using the to-be-listened-on spectrum by the current base station, energy information of a signal sent by the current base station, and further determines, according to energy information obtained by listening on the to-be-listened-on spectrum and the energy information of the signal sent by the current base station, the energy information of the interfering signal on the to-be-listened-on spectrum to obtain the first listening result.

With reference to the eighth possible implementation manner of the fourth aspect, in a ninth possible implementation manner of the fourth aspect, the selection module is specifically configured to select, from the to-be-listened-on spectrum according to the energy information of the interfering signal on the to-be-listened-on spectrum, a to-be-listened-on spectrum that meets a preset condition, where:
the preset condition includes at least one of the following three items:
   a value of energy information of an interfering signal on a to-be-listened-on spectrum is less than a first preset value;
   a value of a signal to interference plus noise ratio SINR of a to-be-listened-on spectrum is greater than a second preset value, where the value of the SINR is a ratio of reference signal received power RSRP of a channel currently used by the UE to a value of energy information of an interfering signal on the to-be-listened-on spectrum; and
   a channel quality indicator CQI of a to-be-listened-on spectrum is greater than a third preset value, where a value of the CQI is corresponding to a ratio of RSRP of a channel currently used by the UE to a value of energy information of an interfering signal on the to-be-listened-on spectrum.

With reference to any one of the fourth aspect and the first to the seventh possible implementation manners of the fourth aspect, in a tenth possible implementation manner of the fourth aspect, the first listening result is description information of an idle spectrum selected by the UE, and the selection module is specifically configured to:
determine the idle spectrum from the to-be-listened-on spectrum according to the description information of the idle spectrum selected by the UE, where:
   the description information of the idle spectrum selected by the UE is description information of a to-be-listened-on spectrum that meets a preset condition and that is selected from the to-be-listened-on spectrum by the UE according to energy information that is of an interfering signal on the to-be-listened-on spectrum and that is obtained by performing interference listening on the to-be-listened-on spectrum, and the preset condition includes at least one of the following three items:
      a value of energy information of an interfering signal on a to-be-listened-on spectrum is less than a first preset value;
      a value of a signal to interference plus noise ratio SINR of a to-be-listened-on spectrum is greater than a second preset value, where the value of the SINR is a ratio of reference signal received power RSRP of a channel currently used by the UE to a value of energy information of an interfering signal on the to-be-listened-on spectrum; and
      a channel quality indicator CQI of a to-be-listened-on spectrum is greater than a third preset value, where a value of the CQI is corresponding to a ratio of RSRP of a channel currently used by the UE to a value of energy information of an interfering signal on the to-be-listened-on spectrum.

According to a fifth aspect, an embodiment of the present invention provides another wireless communication apparatus, including:
a listening module, configured to perform interference listening on a to-be-listened-on spectrum to obtain a first listening result, where the to-be-listened-on spectrum belongs to an unlicensed spectrum; and
a sending module, configured to send the first listening result to the base station, so that the base station selects, from the to-be-listened-on spectrum according to the first listening result, an idle spectrum to communicate with user equipment UE.

In a first possible implementation manner of the fifth aspect, the apparatus further includes:
a receiving module, configured to: before interference listening is performed on the to-be-listened-on spectrum, receive listening configuration information sent by the base station; and
the listening module is specifically configured to perform interference listening on the to-be-listened-on spectrum according to the listening configuration information.

With reference to the first possible implementation manner of the fifth aspect, in a second possible implementation manner of the fifth aspect, description information of the to-be-listened-on spectrum is preset on the listening module, and the listening module is specifically configured to perform interference listening on the to-be-listened-on spectrum according to the preset description information of the to-be-listened-on spectrum; or
the listening configuration information includes description information of the to-be-listened-on spectrum, and the listening module is specifically configured to perform interference listening on the to-be-listened-on spectrum according to the description information that is of the to-be-listened-on spectrum and in the listening configuration information.

With reference to the first possible implementation manner of the fifth aspect, in a third possible implementation manner of the fifth aspect, the listening configuration information includes a second listening result, the second listening result is obtained by the base station by listening on an available spectrum, and the available spectrum is an unlicensed spectrum that includes the to-be-listened-on spectrum; and
the listening module is specifically configured to:
determine description information of the to-be-listened-on spectrum according to the second listening result in the listening configuration information; and
perform interference listening on the to-be-listened-on spectrum according to the description information of the to-be-listened-on spectrum.

With reference to any one of the first to the third possible implementation manners of the fifth aspect, in a fourth possible implementation manner of the fifth aspect, the listening configuration information further includes configuration information used to indicate a resource occupied when the sending module sends the first listening result, and the configuration information includes at least one of time domain information, frequency domain information, and code domain information; and
the sending module is specifically configured to send, on the resource corresponding to the configuration information, the first listening result to the base station.

With reference to any one of the first to the fourth possible implementation manners of the fifth aspect, in a fifth possible implementation manner of fifth aspect, the listening configuration information further includes listening time information; and
the listening time information is used to indicate a time at which the listening module starts and/or stops performing listening on the to-be-listened-on spectrum, and the listening module is specifically configured to start and/or stop performing interference listening on the to-be-listened-on spectrum according to the listening time information; or
the listening time information is used to instruct the listening module to use the listening time information as a period, and the listening module is specifically configured to perform, with a period of the listening time information, interference listening on the to-be-listened-on spectrum.

With reference to any one of the first to the fourth possible implementation manners of the fifth aspect, in a sixth possible implementation manner of the fifth aspect, before performing interference listening on the to-be-listened-on spectrum, the listening module is further configured to receive a trigger instruction sent by the base station and start performing interference listening on the to-be-listened-on spectrum.

With reference to any one of the first to the fourth possible implementation manners of the fifth aspect, in a seventh possible implementation manner of the fifth aspect, the listening configuration information further includes information about a listening trigger condition; and
the listening module is specifically configured to: when it is determined that quality of a currently used channel meets the trigger condition, perform interference listening on the to-be-listened-on spectrum.

With reference to any one of the fifth aspect and the first to the seventh possible implementation manners of the fifth aspect, in an eighth possible implementation manner of the fifth aspect, the first listening result is energy information of an interfering signal on the to-be-listened-on spectrum, and before performing listening on the to-be-listened-on spectrum, the listening module is further configured to:
receive information that is sent by the base station and that is about a status of using the to-be-listened-on spectrum by the current base station, where the information about a status of using includes data scheduling information corresponding to a signal sent on the to-be-listened-on spectrum by the current base station; and
the listening module is specifically configured to:
   perform listening on a signal on the to-be-listened-on spectrum to obtain energy information of the signal on the to-be-listened-on spectrum, and determine, according to the information about a status of using the to-be-listened-on spectrum by the current base station, energy information of a signal sent by the base station; and
   determine, according to the energy information of the signal on the to-be-listened-on spectrum and the energy information of the signal sent by the base station, the energy information of the interfering signal on the to-be-listened-on spectrum to obtain the first listening result.

With reference to any one of the fifth aspect and the first to the seventh possible implementation manners of the fifth aspect, in a ninth possible implementation manner of the fifth aspect, the first listening result is description information of an idle spectrum selected by the listening module, and the listening module is specifically configured to:
perform interference listening on the to-be-listened-on spectrum to obtain energy information of an interfering signal on the to-be-listened-on spectrum; and
select, from the to-be-listened-on spectrum according to the energy information of the interfering signal on the to-be-listened-on spectrum, an idle spectrum that meets a preset condition, and determine description information of the idle spectrum to obtain the first listening result, where:
   the preset condition includes at least one of the following three items:
      a value of energy information of an interfering signal on a to-be-listened-on spectrum is less than a first preset value;
      a value of a signal to interference plus noise ratio SINR of a to-be-listened-on spectrum is greater than a second preset value, where the value of the SINR is a ratio of reference signal received power RSRP of a channel currently used by the UE to a value of energy information of an interfering signal on the to-be-listened-on spectrum; and
      a channel quality indicator CQI of a to-be-listened-on spectrum is greater than a third preset value, where a value of the CQI is corresponding to a ratio of RSRP of a channel currently used by the UE to a value of energy information of an interfering signal on the to-be-listened-on spectrum.

In the technical solutions of the present invention, UE performs listening on a to-be-listened-on spectrum, so that an interference listening scope of a base station can be expanded, and a hidden node for the base station can be discovered. Therefore, the base station may select a suitable unlicensed spectrum to communicate with the UE, thereby reducing strength of possible interference caused to communication between the base station and the UE on the selected unlicensed spectrum.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of a wireless communication method according to Embodiment 1 of the present invention;
FIG. 2 is a flowchart of a wireless communication method according to Embodiment 2 of the present invention;
FIG. 3 is a flowchart of a wireless communication method according to Embodiment 3 of the present invention;
FIG. 4 is a schematic structural diagram of a wireless communication apparatus according to Embodiment 4 of the present invention;
FIG. 5 is a schematic structural diagram of a wireless communication apparatus according to Embodiment 5 of the present invention;
FIG. 6 is a schematic structural diagram of a base station according to Embodiment 6 of the present invention; and
FIG. 7 is a schematic structural diagram of user equipment according to Embodiment 7 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

### Embodiment 1

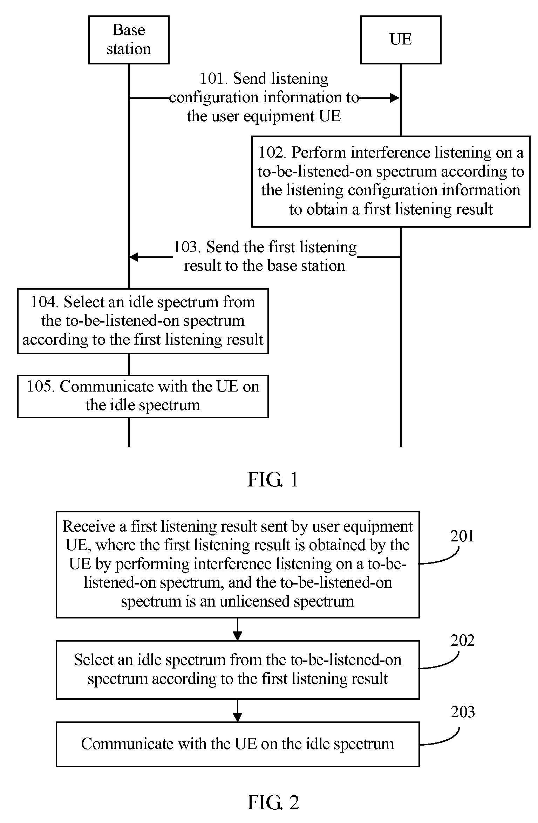

FIG. 1 is a flowchart of a wireless communication method according to Embodiment 1 of the present invention. Referring to FIG. 1, the method in this embodiment specifically includes the following steps:
Step 101: Abase station sends listening configuration information to user equipment UE.

In this embodiment, the base station may be a base station in an LTE (long term evolution, Long Term Evolution) system, and may specifically include a macro base station, or an access device of a metro cell (Metro cell), a micro cell (Micro cell), a pico cell (Pico cell), or a femto cell (Femto cell). Further, the base station herein may be an access point (access point, AP) of a wireless local area network (Wireless Local Area Networks, WLAN) that uses a Wireless Fidelity (Wireless Fidelity, Wi-Fi) technology. The listening configuration information sent by the base station may be specifically sent by using radio resource control RRC dedicated signaling, RRC broadcast signaling, Media Access Control MAC signaling, physical layer signaling, or the like.

Optionally, before step 101, the method in this embodiment further includes: generating, by the base station, the listening configuration information.

Step 102: The UE performs interference listening on a to-be-listened-on spectrum according to the listening configuration information to obtain a first listening result.

In practical application, the to-be-listened-on spectrum may be an unlicensed spectrum, or may be a licensed spectrum. In this embodiment, the to-be-listened-on spectrum is preferably an unlicensed (unlicensed) spectrum.

Optionally, the listening configuration information may include description information of the to-be-listened-on spectrum. In this step, the UE specifically performs interference listening on the to-be-listened-on spectrum according to the description information that is of the to-be-listened-on spectrum and in the listening configuration information, where the description information of the to-be-listened-on spectrum includes time domain information and/or frequency domain information of the to-be-listened-on spectrum. The time domain information may be represented by time set information for performing listening on one or more carriers on the to-be-listened-on spectrum, such as subframe set information. The time domain information may be implemented in a manner of configuring an inter-frequency measurement gap (Measurement gap), or may be implemented in another manner, which is not limited herein. It should be noted that, if the base station does not send a signal on the to-be-listened-on spectrum, the UE may understand a time on the to-be-listened-on spectrum as a time on a currently used spectrum. For example, the n^{th} subframe of the to-be-listened-on spectrum may be determined according to subframe information of the currently used spectrum. The description information of the to-be-listened-on spectrum may be preset on the base station or may be temporarily determined by the base station. Preferably, in this embodiment, to relieve a burden on the UE and precisely narrow a spectrum to be listened on by the UE, the base station may first perform listening on an available spectrum in advance, and the base station filters out, according to a listening result, a relatively idle spectrum and determines description information of the spectrum so as to obtain the description information of the to-be-listened-on spectrum, where the available spectrum is an unlicensed spectrum that includes the to-be-listened-on spectrum, and may specifically refer to all unlicensed spectrums. Correspondingly, before step 101, the base station further performs the following step:
performing interference listening on an available spectrum to obtain a second listening result, where the available spectrum is an unlicensed spectrum that includes the to-be-listened-on spectrum.

Alternatively, the base station sends the second listening result to the UE by including the second listening result obtained by means of listening into the listening configuration information. In step 102, that the UE performs interference listening on a to-be-listened-on spectrum according to the listening configuration information includes: determining, by the UE according to the second listening result, a relatively idle spectrum and determining description information of the idle spectrum so as to obtain the description information of the to-be-listened-on spectrum, and performing interference listening on the to-be-listened-on spectrum according to the determined description information of the to-be-listened-on spectrum.

Alternatively, the description information of the to-be-listened-on spectrum is preset in the UE, and the UE performs interference listening according to the description information that is of the to-be-listened-on spectrum and that is preset on the UE.

The foregoing second listening result may be specifically energy information of a signal on the available spectrum.

Optionally, to control interference listening of the UE, before step 102, the base station may start or end interference listening of the UE by sending a trigger instruction to the UE.

Optionally, to control interference listening of the UE, the base station may also control interference listening of the UE by including listening time information or information about a listening trigger condition into the listening configuration information. The listening time information is used to indicate a time at which the UE starts and/or stops performing interference listening on the to-be-listened-on spectrum, or is used to instruct the UE to perform, with a period of the listening time information, interference listening on the to-be-listened-on spectrum, and the listening trigger condition is used to instruct the UE to perform interference listening on the to-be-listened-on spectrum when quality of a currently used channel meets the trigger condition. Correspondingly, in step 102, that the UE performs interference listening on a to-be-listened-on spectrum according to the listening configuration information further specifically includes: performing interference listening on the to-be-listened-on spectrum according to the listening time information or the information about the listening trigger condition in the listening configuration information. The quality of the channel currently used by the UE may be determined according to at least one of reference signal received power RSRP (Reference signal received power), reference signal received quality RSRQ (Reference signal received quality), a channel quality indicator CQI (Channel quality indicator), and a reference signal strength indicator RSSI (Received Signal Strength Indicator) of the currently used channel.

In addition, by presetting the listening time information or the information about the listening trigger condition in the UE, the UE may also control, according to the preset listening time information or the listening trigger condition, interference listening performed by the UE on the to-be-listened-on spectrum.

Step 103: The UE sends the first listening result to the base station.

In this embodiment, the listening configuration information may further include reporting configuration information that indicates a resource occupied when the UE reports the first listening result, or the reporting configuration information is predefined and preset in the UE, and the reporting configuration information includes at least one of time domain information, frequency domain information, and code domain information. Correspondingly, step 103 that the UE sends the first listening result to the base station includes:
sending, by the UE on the resource corresponding to the reporting configuration information, the first listening result to the base station.

Step 104: The base station selects an idle spectrum from the to-be-listened-on spectrum according to the first listening result.

The first listening result reported by the UE may be energy information of an interfering signal on the to-be-listened-on spectrum, or may be description information of an idle spectrum selected by the UE.

When the base station provides a data service for another UE on the to-be-listened-on spectrum, energy information obtained by the UE by performing listening on a signal on the to-be-listened-on spectrum includes energy information of an interfering signal and energy information S of a signal sent by the current base station, where the interfering signal is a signal sent on the to-be-listened-on spectrum by another device (which may be another base station, wifi device, or the like) except the current base station, and the energy information of the interfering signal may be represented by energy I (interference) of the interfering signal, or may be represented by I and noise N (noise); therefore, a value of the energy information of the interfering signal may be equal to energy I of the interfering signal, or may be equal to the sum of I and noise N. Specifically, in this embodiment, that the value of the energy information of the interfering signal is I+N is used as an example. The signal sent by the base station affects a result of listening on an interfering signal by the UE, and if impact of the signal sent by the base station is not considered or when the base station does not send a signal on the to-be-listened-on spectrum, the energy information of the interfering signal on the listened-on spectrum may be obtained by the UE by performing energy detection on all signals on the to-be-listened-on spectrum. If impact of a signal sent by the base station on the first listening result needs to be eliminated to further improve precision of interference listening, in this embodiment, before step 102, the method further includes:
sending, by the base station to the UE, information about a status of using the to-be-listened-on spectrum by the current base station, where the information about a status of using includes data scheduling information corresponding to a signal sent on the to-be-listened-on spectrum by the current base station.

Specifically, the information that is about a status of using the to-be-listened-on spectrum and sent by the base station does not carry a user equipment ID (User equipment identification, UE ID), so that any UE can obtain, by means of parsing, the information about a status of using the to-be-listened-on spectrum, and learn a data scheduling status on the to-be-listened-on spectrum. The information that is about a status of using the to-be-listened-on spectrum and sent by the base station may be specifically carried on a physical downlink control channel PDCCH (Physical downlink control channel), or may be carried on an enhanced downlink control channel EPDCCH (Enhanced physical downlink control channel).

Correspondingly, if the first listening result is the energy information of the interfering signal on the to-be-listened-on spectrum, step 102 that the UE performs interference listening on a to-be-listened-on spectrum according to the listening configuration information to obtain a first listening result further specifically includes:
performing, by the UE, listening on a signal on the to-be-listened-on spectrum to obtain energy information of the signal on the to-be-listened-on spectrum, and determining, according to the information about a status of using the to-be-listened-on spectrum by the current base station, energy information of a signal sent by the base station; and
determining, by the UE according to the energy information of the signal on the to-be-listened-on spectrum and the energy information of the signal sent by the base station, the energy information of the interfering signal on the to-be-listened-on spectrum to obtain the first listening result.

In the foregoing embodiment, when the base station sends a signal on the to-be-listened-on spectrum to another UE, according to the information that is about a status of using the to-be-listened-on spectrum by the current base station and that is sent by the base station, the UE may recover energy information S of the signal sent by the base station, and further precisely obtain energy I and noise N of an interfering signal, which improves precision of performing interference listening on the to-be-listened-on spectrum by the UE.

When the first listening result is the energy information of the interfering signal on the to-be-listened-on spectrum, correspondingly, step 104 that the base station selects an idle spectrum from the to-be-listened-on spectrum according to the first listening result specifically includes:
selecting, by the base station from the to-be-listened-on spectrum according to the energy information of the interfering signal on the to-be-listened-on spectrum, a to-be-listened-on spectrum that meets a preset condition.

In this embodiment, the preset condition may be set according to a requirement, and a to-be-listened-on spectrum that meets the preset condition is determined as an idle spectrum. Because a smaller value of energy information of an interfering signal indicates an idler corresponding spectrum, and a larger signal to interference plus noise ratio SINR (Signal interference noise ratio) of a to-be-listened-on spectrum and a larger channel quality indicator CQI of the to-be-listened-on spectrum indicate better channel quality corresponding to the spectrum and an idler spectrum, in this embodiment, the preset condition may specifically include at least one of the following three items:
a value of energy information of an interfering signal on a to-be-listened-on spectrum is less than a first preset value;
a value of a signal to interference plus noise ratio SINR of a to-be-listened-on spectrum is greater than a second preset value, where the value of the SINR is a ratio of reference signal received power RSRP of a channel currently used by the UE to a value of energy information of an interfering signal on the to-be-listened-on spectrum, that is, RSRP/(N+I), or the value of the SINR is a ratio of received signal energy of a channel currently used by the UE to a value of energy information of an interfering signal on the to-be-listened-on spectrum; and
a channel quality indicator CQI of a to-be-listened-on spectrum is greater than a third preset value, where a value of the CQI is corresponding to a ratio of RSRP of a channel currently used by the UE to a value of energy information of an interfering signal on the to-be-listened-on spectrum, or a value of the CQI is corresponding to a ratio of received signal energy of a channel currently used by the UE to a value of energy information of an interfering signal on the to-be-listened-on spectrum.

In this embodiment, there is a correspondence between the CQI and the ratio of the reference signal received power RSRP of the channel currently used by the UE to the value of the energy information of the interfering signal on the to-be-listened-on spectrum, and the correspondence herein may be represented as follows: If the ratio of the reference signal received power RSRP of the channel currently used by the UE to the value of the energy information of the interfering signal on the to-be-listened-on spectrum is larger, that is, a value of RSRP/(I+N) is larger, it indicates that the CQI is larger. There is also a correspondence between the CQI and the ratio of a value of the received signal energy of the channel currently used by the UE to the value of the energy information of the interfering signal on the to-be-listened-on spectrum, and a larger ratio of the received signal energy of the channel currently used by the UE to the value of the energy information of the interfering signal on the to-be-listened-on spectrum indicates a larger CQI. Therefore, the value of the corresponding CQI may be determined according to the ratio of the reference signal received power RSRP of the channel currently used by the UE to the value of the energy information of the interfering signal on the to-be-listened-on spectrum, or according to the ratio of the received signal energy of the channel currently used by the UE to the value of the energy information of the interfering signal on the to-be-listened-on spectrum.

The RSRP of the channel currently used by the UE and the received signal energy of the channel currently used by the UE may be specifically reported to the base station by the UE. In addition, the base station may also obtain by means of calculation, according to the RSRQ and the RSSI of the currently used channel that are reported by the UE, the RSRP of the channel currently used by the UE or the received signal energy of the channel currently used by the UE. The channel currently used by the UE may be specifically a channel corresponding to a spectrum currently used by the UE or an activated spectrum. For example, the channel currently used by the UE may be a channel corresponding to a spectrum of a primary cell (Primary cell, Pcell) of the UE, or may be a channel corresponding to a spectrum that has been activated and that is of a secondary cell (Secondary cell, Scell) of the UE.

Optionally, in the foregoing embodiment, if the first listening result is the description information of the idle spectrum selected by the UE, that is, when the idle spectrum is selected by the UE, correspondingly, step 102 that the UE performs interference listening on a to-be-listened-on spectrum according to the listening configuration information to obtain a first listening result specifically includes: performing, by the UE, interference listening on the to-be-listened-on spectrum to obtain the energy information of the interfering signal on the to-be-listened-on spectrum; and selecting, as an idle spectrum from the to-be-listened-on spectrum according to the energy information of the interfering signal on the to-be-listened-on spectrum, a spectrum that meets the foregoing preset condition, and determining description information of the idle spectrum to obtain the first listening result. Correspondingly, step 104 that the base station selects an idle spectrum from the to-be-listened-on spectrum according to the first listening result specifically includes: selecting, by the base station, the idle spectrum from the to-be-listened-on spectrum according to the description information that is of the idle spectrum and that is reported by the UE.

Step 105: The base station communicates with the UE on the idle spectrum.

Preferably, in this embodiment, an SINR or a CQI of the idle spectrum may be used to assist the base station in performing data scheduling on the selected idle spectrum. Specifically, the base station may determine, by using the SINR or the CQI of the idle spectrum, a modulation and coding scheme MCS (Modulator Coder Scheme) corresponding to data communication with the UE on the selected idle spectrum, and perform, according to the MCS, coding and modulation on data generated from data communication with the UE.

After step 105, the base station may configure the selected idle spectrum as a spectrum corresponding to the secondary cell Scell of the UE.

Optionally, when the base station receives first listening results reported by multiple UEs, and idle spectrums selected by the multiple UEs are a same spectrum resource, to ensure quality of communication between the UE and the base station, the base station preferably configures the selected idle spectrum for most appropriate UE, and schedules only the most appropriate UE on the idle spectrum, where the most appropriate UE refers to UE that obtains a minimum value of energy information of an interfering signal by performing interference listening, or UE that has a maximum corresponding value of an SINR on a spectrum on which interference listening is performed, or UE that has a maximum corresponding value of a CQI on a spectrum on which interference listening is performed.

Because UE located in a common coverage area of a base station and a hidden node for the base station may obtain, by means of listening, an interfering signal sent by the hidden node, in the method in this embodiment, UE performs listening on a to-be-listened-on spectrum, so that an interference listening scope of the base station can be expanded, and the hidden node for the base station can be discovered. Therefore, the base station may select a suitable unlicensed spectrum to communicate with the UE, thereby reducing strength of possible interference caused to communication between the base station and the UE on the selected unlicensed spectrum.

In the method in this embodiment, impact of the hidden node for the base station on communication between the base station and the UE may be reduced, and according to the method in this embodiment, persons skilled in the art can easily figure out that, by replacing the base station in this embodiment with another access point device, impact of a hidden node for the access point device on communication between the access point device and the UE can be reduced.

### Embodiment 2

FIG. 2 is a flowchart of a wireless communication method according to Embodiment 2 of the present invention. The method in this embodiment may be performed by a base station, and referring to FIG. 2, the method in this embodiment includes the following steps:

Step 201: Receive a first listening result sent by user equipment UE, where the first listening result is obtained by the UE by performing interference listening on a to-be-listened-on spectrum, and the to-be-listened-on spectrum is an unlicensed spectrum.

In this embodiment, reporting configuration information that indicates a resource occupied when the UE reports the first listening result may be preset on the UE, and the reporting configuration information includes at least one of time domain information, frequency domain information, and code domain information. In step 201, the receiving a first listening result sent by user equipment UE is specifically receiving the first listening result sent by the UE on the resource corresponding to the reporting configuration information.

Optionally, description information of the to-be-listened-on spectrum may also be preset on the UE, and the description information of the to-be-listened-on spectrum includes time domain information and/or frequency domain information of the to-be-listened-on spectrum, where the time domain information may be represented by time information for performing listening on one or more carriers on a to-be-listened-on unlicensed spectrum, such as subframe information. The first listening result is obtained by the UE by performing interference listening according to the preset description information of the to-be-listened-on spectrum.

To control interference listening performed by the UE on the to-be-listened-on spectrum, listening time information may be preset on the UE to indicate a time at which the UE starts and/or stops performing interference listening on the to-be-listened-on spectrum, or to instruct the UE to perform, with a period of the listening time information, interference listening on the to-be-listened-on spectrum; or
listening of the UE is controlled by presetting information about a listening trigger condition in the UE, where the listening trigger condition is used to instruct the UE to perform interference listening on the to-be-listened-on spectrum when quality of a currently used channel meets the trigger condition; or
the base station sends a trigger instruction to the UE, so that the UE starts performing interference listening on the to-be-listened-on spectrum after receiving the trigger instruction, and listening of the UE is controlled by the base station.

Optionally, to improve flexibility of listening of the UE, the UE may perform listening according to listening configuration generated by the base station. Correspondingly, before step 201, the method further includes:
generating listening configuration information, where the listening configuration information is used to configure the user equipment UE to perform interference listening, the interference listening refers to energy detection on the to-be-listened-on spectrum, and the to-be-listened-on spectrum belongs to an unlicensed spectrum; and
sending the listening configuration information to the UE, so that the UE performs interference listening on the to-be-listened-on spectrum according to the listening configuration information.

Specifically, the base station sends the listening configuration information to the UE by using radio resource control RRC dedicated signaling, RRC broadcast signaling, Media Access Control MAC signaling, or physical layer signaling.

Optionally, one or more items of the foregoing reporting configuration information that indicates the resource occupied when the UE reports the first listening result, the description information of the to-be-listened-on spectrum, the listening time information, and the information about the listening trigger condition may also be carried in the listening configuration information and sent to the UE by the base station.

Optionally, in this embodiment, to relieve a burden on the UE and narrow a spectrum on which the UE needs to listen, the base station may first perform listening on an available spectrum in advance, and filter out, according to a listening result, a spectrum considered idle by the base station and use the spectrum as a to-be-listened-on spectrum of the UE. The available spectrum is an unlicensed spectrum that includes the to-be-listened-on spectrum, and may specifically refer to all unlicensed spectrum resources. Correspondingly, before sending the listening configuration information to the UE, the base station further performs the following operation step:
performing interference listening on the available spectrum to obtain a second listening result.

Correspondingly, the listening configuration information sent to the UE by the base station may include the second listening result, so that the UE determines the description information of the to-be-listened-on spectrum according to the second listening result, or the base station selects an idle spectrum from the available spectrum according to the second listening result and determines description information of the idle spectrum to obtain the description information of the to-be-listened-on spectrum, and sends, to the UE, the listening configuration information that carries the description information of the to-be-listened-on spectrum, so that the UE performs interference listening according to the description information that is of the to-be-listened-on spectrum and in the listening configuration information.

When the base station uses the to-be-listened-on spectrum to communicate with another UE, a signal sent by the base station affects precision of interference listening of the UE. To eliminate impact of the signal sent by the current base station on a listening result of the UE, the base station in this embodiment may further send information about a status of using the to-be-listened-on spectrum by the current base station, and the UE may recover, according to the information about a status of using the to-be-listened-on spectrum by the current base station, energy information S of a signal sent by the current base station, and subtract a value of the energy information S of the signal sent by the current base station from a value of energy information obtained by listening on all signals on the to-be-listened-on spectrum, so as to precisely obtain energy information of an interfering signal on the to-be-listened-on spectrum, where the interfering signal is a signal sent on the to-be-listened-on spectrum by another device except the base station, and the energy information of the interfering signal includes energy I and noise N of the interfering signal.

Step 202: Select an idle spectrum from the to-be-listened-on spectrum according to the first listening result.

Optionally, in this embodiment, the first listening result may be energy information of an interfering signal on the to-be-listened-on spectrum. Correspondingly, step 202 that select an idle spectrum from the to-be-listened-on spectrum according to the first listening result specifically includes: selecting, from the to-be-listened-on spectrum according to the energy information of the interfering signal on the to-be-listened-on spectrum, a to-be-listened-on spectrum that meets a preset condition.

Optionally, the first listening result may also be description information of an idle spectrum selected by the UE. The UE selects, as an idle spectrum from the to-be-listened-on spectrum according to energy information that is of an interfering signal on the to-be-listened-on spectrum and that is obtained by means of interference listening, a to-be-listened-on spectrum that meets a preset condition, and uses description information of the selected idle spectrum as the first listening result and sends the first listening result to the base station. Correspondingly, in step 202, the selecting an idle spectrum from the to-be-listened-on spectrum according to the first listening result specifically includes: selecting the idle spectrum from the to-be-listened-on spectrum according to the description information that is of the idle spectrum and that is reported by the UE.

The foregoing preset condition may be set according to a requirement, and a to-be-listened-on spectrum that meets the preset condition is determined as an idle spectrum. Because a smaller value of energy information of an interfering signal indicates an idler corresponding spectrum, and a larger value of a signal to interference plus noise ratio SINR (Signal interference noise ratio) of a to-be-listened-on spectrum and a larger value of a channel quality indicator CQI of the to-be-listened-on spectrum indicate better channel quality corresponding to the spectrum and an idler spectrum, in this embodiment, the preset condition may specifically include at least one of the following three items:
a value of energy information of an interfering signal on a to-be-listened-on spectrum is less than a first preset value;
a value of a signal to interference plus noise ratio SINR of a to-be-listened-on spectrum is greater than a second preset value, where the value of the SINR is a ratio of reference signal received power RSRP of a channel currently used by the UE to a value of energy information of an interfering signal on the to-be-listened-on spectrum, that is, RSRP/(N+I), or the value of the SINR is a ratio of received signal energy of a channel currently used by the UE to a value of energy information of an interfering signal on the to-be-listened-on spectrum; and
a channel quality indicator CQI of a to-be-listened-on spectrum is greater than a third preset value, where a value of the CQI is corresponding to a ratio of RSRP of a channel currently used by the UE to a value of energy information of an interfering signal on the to-be-listened-on spectrum, or a value of the CQI is corresponding to a ratio of received signal energy of a channel currently used by the UE to a value of energy information of an interfering signal on the to-be-listened-on spectrum.

Step 203: Communicate with the UE on the idle spectrum.

Preferably, in this embodiment, an SINR or a CQI of the idle spectrum may be used to assist the base station in performing data scheduling on the selected idle spectrum. Specifically, the base station may determine, by using the SINR or the CQI of the idle spectrum, a modulation and coding scheme MCS (Modulator Coder Scheme) corresponding to data communication with the UE on the selected idle spectrum, and perform, according to the MCS, coding and modulation on data generated from data communication with the UE.

Because UE located in a common coverage area of a base station and a hidden node for the base station may obtain, by means of listening, an interfering signal sent by the hidden node, in the method in this embodiment, UE performs listening on a to-be-listened-on spectrum, so that an interference listening scope of the base station can be expanded, and the hidden node for the base station can be discovered. Therefore, the base station may select a suitable unlicensed spectrum to communicate with the UE, thereby reducing strength of possible interference caused to communication between the base station and the UE on the selected unlicensed spectrum.

In the method in this embodiment, impact of the hidden node for the base station on communication between the base station and the UE may be reduced, and according to the method in this embodiment, persons skilled in the art can easily figure out that, by replacing the base station in this embodiment with another access point device, impact of a hidden node for the access point device on communication between the access point device and the UE can be reduced.

### Embodiment 3

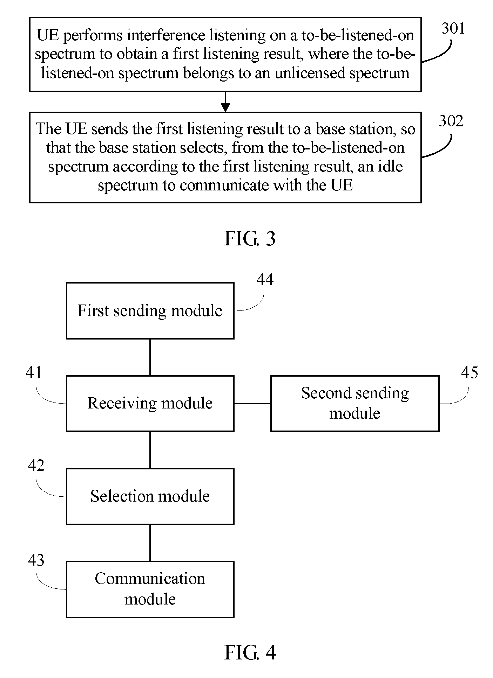

FIG. 3 is a flowchart of a wireless communication method according to Embodiment 3 of the present invention. Referring to FIG. 3, the method in this embodiment specifically includes the following steps:

Step 301: UE performs interference listening on a to-be-listened-on spectrum to obtain a first listening result, where the to-be-listened-on spectrum belongs to an unlicensed spectrum.

Optionally, in this embodiment, description information of the to-be-listened-on spectrum may be preset on the UE, and the description information of the to-be-listened-on spectrum includes time domain information and/or frequency domain information of the to-be-listened-on spectrum, where the time domain information may be represented by time information for performing listening on one or more carriers on a to-be-listened-on unlicensed spectrum, such as subframe information. The first listening result is obtained by the UE by performing interference listening according to the preset description information of the to-be-listened-on spectrum.

Optionally, to control interference listening performed by the UE on the to-be-listened-on spectrum, in this embodiment, listening time information may be preset on the UE to indicate a time at which the UE starts and/or stops performing interference listening on the to-be-listened-on spectrum, or to instruct the UE to perform, with a period of the listening time information, interference listening on the to-be-listened-on spectrum; or
listening of the UE is controlled by presetting information about a listening trigger condition in the UE, where the listening trigger condition is used to instruct the UE to perform interference listening on the to-be-listened-on spectrum when quality of a currently used channel meets the trigger condition; or
before this step, the UE receives a trigger instruction sent by a base station, and starts performing interference listening on the to-be-listened-on spectrum, so that listening of the UE is controlled by the base station.

Optionally, to improve flexibility of listening of the UE, the UE may perform listening according to listening configuration generated by the base station. Correspondingly, before step 301, the method further includes: receiving, by the user equipment UE, listening configuration information sent by the base station.

One or more items of the foregoing description information of the to-be-listened-on spectrum, the listening time information, and the information about the listening trigger condition may be carried in the listening configuration information, and the UE performs interference listening on the to-be-listened-on spectrum according to the listening configuration information.

Optionally, to relieve a burden on the UE and narrow a spectrum on which the UE needs to listen, the base station may first perform listening on an available spectrum in advance, and filter out, according to a listening result, a spectrum considered idle by the base station and use the spectrum as a to-be-listened-on spectrum of the UE. The available spectrum is an unlicensed spectrum that includes the to-be-listened-on spectrum, and may specifically refer to all unlicensed spectrum resources. In this embodiment, the base station obtains a second listening result by performing interference listening on the available spectrum, determines an idle spectrum according to the second listening result and uses the idle spectrum as a to-be-listened-on spectrum, and includes description information of the to-be-listened-on spectrum into the listening configuration information and sends the listening configuration information to the UE; or the base station includes the second listening result into the listening configuration information, and the UE determines an idle spectrum according to the second listening result and uses the idle spectrum as a to-be-listened-on spectrum, and determines description information of the to-be-listened-on spectrum.

When the base station uses the to-be-listened-on spectrum to communicate with another UE, a signal sent by the base station affects precision of interference listening of the UE. To eliminate impact of the signal sent by the current base station on a listening result of the UE, optionally, in this embodiment, before step 301, the method further includes: receiving, by the UE, information that is about a status of using the to-be-listened-on spectrum by the current base station and that is sent by the base station. The UE may recover, according to the information about a status of using the to-be-listened-on spectrum by the current base station, energy information S of a signal sent by the current base station, and subtract a value of the energy information S of the signal sent by the current base station from a value of energy information obtained by listening on all signals on the to-be-listened-on spectrum, so as to precisely obtain energy information of an interfering signal on the to-be-listened-on spectrum, where the interfering signal is a signal sent on the to-be-listened-on spectrum by another device except the base station, and the energy information of the interfering signal includes energy I and noise N of the interfering signal.

Step 302: The UE sends the first listening result to the base station, so that the base station selects, from the to-be-listened-on spectrum according to the first listening result, an idle spectrum to communicate with the UE.

Optionally, reporting configuration information that indicates a resource occupied when the UE reports the first listening result may be preset on the UE, and the UE sends, on the resource corresponding to the reporting configuration information, the first listening result to the base station. Alternatively, the reporting configuration information is carried in the listening configuration information, the UE sends the first listening result to the base station according to the reporting configuration information in the listening configuration information, and the reporting configuration information includes at least one of time domain information, frequency domain information, and code domain information.

Optionally, the first listening result may be energy information of an interfering signal on the to-be-listened-on spectrum, so that the base station selects, from the to-be-listened-on spectrum according to the energy information of the interfering signal on the to-be-listened-on spectrum, an idle spectrum that meets a preset condition to communicate with the UE.

Optionally, the first listening result may also be description information of an idle spectrum selected by the UE, so that the base station determines an idle spectrum in the to-be-listened-on spectrum according to the description information of the idle spectrum selected by the UE. Correspondingly, step 301 is specifically selecting, by the UE from the to-be-listened-on spectrum according to energy information of an interfering signal on the to-be-listened-on spectrum, an idle spectrum that meets a preset condition, and determining description information of the idle spectrum to obtain the first listening result.

The foregoing preset condition may be set according to a requirement, and a to-be-listened-on spectrum that meets the preset condition is determined as an idle spectrum. Because a smaller value of energy information of an interfering signal indicates an idler corresponding spectrum, and a larger value of a signal to interference plus noise ratio SINR (Signal interference noise ratio) of a to-be-listened-on spectrum and a larger value of a channel quality indicator CQI of the to-be-listened-on spectrum indicate better channel quality corresponding to the spectrum and an idler spectrum, in this embodiment, the preset condition may specifically include at least one of the following three items:
a value of energy information of an interfering signal on a to-be-listened-on spectrum is less than a first preset value;
a value of a signal to interference plus noise ratio SINR of a to-be-listened-on spectrum is greater than a second preset value, where the value of the SINR is a ratio of reference signal received power RSRP of a channel currently used by the UE to a value of energy information of an interfering signal on the to-be-listened-on spectrum, that is, RSRP/(N+I), or the value of the SINR is a ratio of received signal energy of a channel currently used by the UE to a value of energy information of an interfering signal on the to-be-listened-on spectrum; and
a channel quality indicator CQI of a to-be-listened-on spectrum is greater than a third preset value, where a value of the CQI is corresponding to a ratio of RSRP of a channel currently used by the UE to a value of energy information of an interfering signal on the to-be-listened-on spectrum, or a value of the CQI is corresponding to a ratio of received signal energy of a channel currently used by the UE to a value of energy information of an interfering signal on the to-be-listened-on spectrum.

In the method in this embodiment, UE performs listening on a to-be-listened-on spectrum, so that an interference listening scope of a base station can be expanded, and a hidden node for the base station can be discovered. Therefore, the base station may select a suitable unlicensed spectrum to communicate with the UE, thereby reducing strength of possible interference caused to communication between the base station and the UE on the selected unlicensed spectrum.

### Embodiment 4

FIG. 4 is a schematic structural diagram of a wireless communication apparatus according to Embodiment 4 of the present invention. Referring to FIG. 4, the apparatus in this embodiment specifically includes:
a receiving module 41, configured to receive a first listening result sent by user equipment UE, where the first listening result is obtained by the UE by performing interference listening on a to-be-listened-on spectrum, and the to-be-listened-on spectrum is an unlicensed spectrum;
a selection module 42, configured to select an idle spectrum from the to-be-listened-on spectrum according to the first listening result; and
a communication module 43, configured to communicate with the UE on the idle spectrum.

Optionally, in the foregoing embodiment, the apparatus further includes a first sending module 44, configured to: before the first listening result sent by the UE is received, send listening configuration information to the UE, so that the UE performs interference listening on the to-be-listened-on spectrum according to the listening configuration information.

The first sending module 44 is specifically configured to send the listening configuration information to the UE by using radio resource control RRC dedicated signaling, RRC broadcast signaling, Media Access Control MAC signaling, or physical layer signaling.

Optionally, to precisely narrow a to-be-listened-on spectrum on which the UE needs to listen, the listening configuration information may include description information of the to-be-listened-on spectrum, and correspondingly, before sending the listening configuration information to the UE, the first sending module 44 is further configured to:
perform interference listening on an available spectrum to obtain a second listening result, where the available spectrum is an unlicensed spectrum that includes the to-be-listened-on spectrum; and
determine the description information of the to-be-listened-on spectrum according to the second listening result.

Alternatively, the first sending module 44 directly includes a second listening result into the listening configuration information, and correspondingly, before sending the listening configuration information to the UE, the first sending module 44 is further configured to:
perform interference listening on an available spectrum to obtain the second listening result, where the available spectrum is an unlicensed spectrum that includes the to-be-listened-on spectrum; and
correspondingly, the first sending module 44 is specifically configured to send, to the UE, the listening configuration information that includes the second listening result, so that the UE determines description information of the to-be-listened-on spectrum according to the second listening result.

Optionally, the listening configuration information may further include reporting configuration information used to indicate a resource occupied when the UE reports the first listening result, and the reporting configuration information includes at least one of time domain information, frequency domain information, and code domain information; and
correspondingly, the receiving module 41 is specifically configured to:
receive, on the resource corresponding to the reporting configuration information, the first listening result sent by the UE.

Optionally, to control interference listening of the UE, the listening configuration information may further include listening time information, and the listening time information is used to indicate a time at which the UE starts and/or stops performing interference listening on the to-be-listened-on spectrum, or the listening time information is used to instruct the UE to perform, with a period of the listening time information, interference listening on the to-be-listened-on spectrum;
or
before receiving the first listening result sent by the UE, the receiving module 41 is further configured to:
send a trigger instruction to the UE, so that the UE starts performing interference listening on the to-be-listened-on spectrum after receiving the trigger instruction.

Alternatively, information about a listening trigger condition is carried in the listening configuration information, so as to control interference listening of the UE, and the information about the listening trigger condition is used to instruct the UE to perform interference listening on the to-be-listened-on spectrum when quality of a currently used channel meets the trigger condition.

Optionally, in this embodiment, the first listening result may be energy information of an interfering signal on the to-be-listened-on spectrum. To improve precision of listening on an interfering signal by the UE, the apparatus further includes a second sending module 45, configured to: before the first listening result sent by the user equipment UE is received, send, to the UE, information about a status of using the to-be-listened-on spectrum by a current base station, where the information about a status of using includes data scheduling information corresponding to a signal sent on the to-be-listened-on spectrum by the current base station, so that the UE determines, according to the information about a status of using the to-be-listened-on spectrum by the current base station, energy information of a signal sent by the current base station, and further determines, according to energy information obtained by listening on the to-be-listened-on spectrum and the energy information of the signal sent by the current base station, the energy information of the interfering signal on the to-be-listened-on spectrum to obtain the first listening result.

Correspondingly, the selection module 42 is specifically configured to select, from the to-be-listened-on spectrum according to the energy information of the interfering signal on the to-be-listened-on spectrum, a to-be-listened-on spectrum that meets a preset condition, where:
the preset condition includes at least one of the following three items:
   a value of energy information of an interfering signal on a to-be-listened-on spectrum is less than a first preset value;
   a value of a signal to interference plus noise ratio SINR of a to-be-listened-on spectrum is greater than a second preset value, where the value of the SINR is a ratio of reference signal received power RSRP of a channel currently used by the UE to a value of energy information of an interfering signal on the to-be-listened-on spectrum, that is, RSRP/(N+I), or the value of the SINR is a ratio of received signal energy of a channel currently used by the UE to a value of energy information of an interfering signal on the to-be-listened-on spectrum; and
   a channel quality indicator CQI of a to-be-listened-on spectrum is greater than a third preset value, where a value of the CQI is corresponding to a ratio of RSRP of a channel currently used by the UE to a value of energy information of an interfering signal on the to-be-listened-on spectrum, or a value of the CQI is corresponding to a ratio of received signal energy of a channel currently used by the UE to a value of energy information of an interfering signal on the to-be-listened-on spectrum.

Optionally, the first listening result may also be description information of an idle spectrum selected by the UE, and correspondingly, the selection module 42 is specifically configured to:
determine the idle spectrum from the to-be-listened-on spectrum according to the description information of the idle spectrum selected by the UE, where the description information of the idle spectrum selected by the UE is description information of a to-be-listened-on spectrum that meets the foregoing preset condition and that is selected from the to-be-listened-on spectrum by the UE according to energy information that is of an interfering signal on the to-be-listened-on spectrum and that is obtained by performing interference listening on the to-be-listened-on spectrum.

The apparatus in this embodiment may be disposed in a base station and may be configured to perform the method in Embodiment 2, and implementation principles and technical effects of the apparatus are similar and are not described herein again.

### Embodiment 5

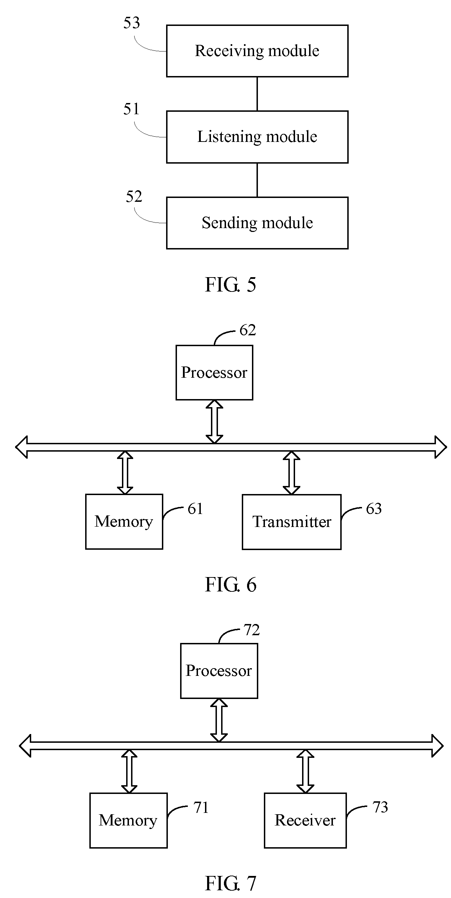

FIG. 5 is a schematic structural diagram of a wireless communication apparatus according to Embodiment 5 of the present invention. The apparatus in this embodiment specifically includes:
a listening module 51, configured to perform interference listening on a to-be-listened-on spectrum to obtain a first listening result, where the to-be-listened-on spectrum belongs to an unlicensed spectrum; and
a sending module 52, configured to send the first listening result to the base station, so that the base station selects, from the to-be-listened-on spectrum according to the first listening result, an idle spectrum to communicate with user equipment UE.

Optionally, the apparatus further includes:
a receiving module 53, configured to: before interference listening is performed on the to-be-listened-on spectrum, receive listening configuration information sent by the base station; and correspondingly, the listening module 51 is specifically configured to perform interference listening on the to-be-listened-on spectrum according to the listening configuration information.

Optionally, in this embodiment, description information of the to-be-listened-on spectrum may be preset on the listening module, and the listening module 51 is specifically configured to perform interference listening on the to-be-listened-on spectrum according to the preset description information of the to-be-listened-on spectrum; or
the listening configuration information includes description information of the to-be-listened-on spectrum, and correspondingly, the listening module 51 is specifically configured to perform interference listening on the to-be-listened-on spectrum according to the description information that is of the to-be-listened-on spectrum and in the listening configuration information.

Alternatively, the listening configuration information includes a second listening result, the second listening result is obtained by the base station by performing listening on an available spectrum, and the available spectrum is an unlicensed spectrum that includes the to-be-listened-on spectrum; and the listening module is specifically configured to: determine description information of the to-be-listened-on spectrum according to the second listening result in the listening configuration information; and perform interference listening on the to-be-listened-on spectrum according to the description information of the to-be-listened-on spectrum.

Optionally, in this embodiment, the listening configuration information may further include configuration information used to indicate a resource occupied when the sending module 52 sends the first listening result, and the configuration information includes at least one of time domain information, frequency domain information, and code domain information; and correspondingly, the sending module 52 is specifically configured to send, on the resource corresponding to the configuration information, the first listening result to the base station.

Optionally, to control interference listening of the listening module, the listening configuration information may further include listening time information, and
the listening time information is used to indicate a time at which the listening module 51 starts and/or stops performing listening on the to-be-listened-on spectrum, and the listening module 51 is specifically configured to start and/or stop performing interference listening on the to-be-listened-on spectrum according to the listening time information; or
the listening time information is used to instruct the listening module 51 to use the listening time information as a period, and the listening module 51 is specifically configured to perform, with a period of the listening time information, interference listening on the to-be-listened-on spectrum.

Optionally, in this embodiment, the base station may also send a trigger instruction, so as to control interference listening of the listening module 51. Correspondingly, before performing interference listening on the to-be-listened-on spectrum, the listening module 51 is further configured to: receive a trigger instruction sent by the base station, and start performing interference listening on the to-be-listened-on spectrum after receiving the trigger instruction.

Alternatively, the listening configuration information may also carry a listening trigger condition to implement control over the listening module, and correspondingly, the listening module 51 is specifically configured to: when it is determined that quality of a currently used channel meets the trigger condition, perform interference listening on the to-be-listened-on spectrum.

Optionally, in this embodiment, the first listening result may be energy information of an interfering signal on the to-be-listened-on spectrum, and before performing listening on the to-be-listened-on spectrum, the listening module 51 is further configured to:
receive information that is sent by the base station and that is about a status of using the to-be-listened-on spectrum by the current base station, where the information about a status of using includes data scheduling information corresponding to a signal sent on the to-be-listened-on spectrum by the current base station; and correspondingly, the listening module 51 is specifically configured to:
   perform listening on a signal on the to-be-listened-on spectrum to obtain energy information of the signal on the to-be-listened-on spectrum, and determine, according to the information about a status of using the to-be-listened-on spectrum by the current base station, energy information of a signal sent by the base station; and
   determine, according to the energy information of the signal on the to-be-listened-on spectrum and the energy information of the signal sent by the base station, the energy information of the interfering signal on the to-be-listened-on spectrum to obtain the first listening result.

Optionally, in this embodiment, the first listening result may also be description information of an idle spectrum selected by the listening module 51, and correspondingly, the listening module 51 is specifically configured to:
perform interference listening on the to-be-listened-on spectrum to obtain energy information of an interfering signal on the to-be-listened-on spectrum; and
select, from the to-be-listened-on spectrum according to the energy information of the interfering signal on the to-be-listened-on spectrum, an idle spectrum that meets a preset condition, and determine description information of the idle spectrum to obtain the first listening result, where:
   the preset condition includes at least one of the following three items:
   a value of energy information of an interfering signal on a to-be-listened-on spectrum is less than a first preset value;
   a value of a signal to interference plus noise ratio SINR of a to-be-listened-on spectrum is greater than a second preset value, where the value of the SINR is a ratio of reference signal received power RSRP of a channel currently used by the UE to a value of energy information of an interfering signal on the to-be-listened-on spectrum, that is, RSRP/(N+I), or the value of the SINR is a ratio of received signal energy of a channel currently used by the UE to a value of energy information of an interfering signal on the to-be-listened-on spectrum; and
   a channel quality indicator CQI of a to-be-listened-on spectrum is greater than a third preset value, where a value of the CQI is corresponding to a ratio of RSRP of a channel currently used by the UE to a value of energy information of an interfering signal on the to-be-listened-on spectrum, or a value of the CQI is corresponding to a ratio of received signal energy of a channel currently used by the UE to a value of energy information of an interfering signal on the to-be-listened-on spectrum.

The apparatus in this embodiment may be disposed in user equipment UE and may be configured to perform the method in Embodiment 3, and implementation principles and technical effects of the apparatus are similar and are not described herein again.

### Embodiment 6

FIG. 6 is a schematic structural diagram of a base station according to Embodiment 6 of the present invention. The base station in this embodiment may be configured to implement steps of the wireless communication method in Embodiment 2 of the present invention. As shown in FIG. 6, the base station in this embodiment includes:
a memory 61, configured to store a program, where specifically, the program may include program code, where the program code includes a computer operation instruction; and the memory 71 may include a high speed RAM memory, or may further include a non-volatile memory (non-volatile memory), for example, at least one magnetic disk memory; and
a processor 62, executing the program stored in the memory 71, so as to: receive a first listening result sent by user equipment UE, where the first listening result is obtained by the UE by performing interference listening on a to-be-listened-on spectrum, and the to-be-listened-on spectrum is an unlicensed spectrum; select an idle spectrum from the to-be-listened-on spectrum according to the first listening result; and communicate with the UE on the idle spectrum.

The processor 62 may be a central processing unit (Central Processing Unit, CPU for short), or an application-specific integrated circuit (Application Specific Integrated Circuit, ASIC for short), or be configured to be one or more integrated circuits implementing this embodiment of the present invention.

Optionally, the base station further includes a transmitter 63, configured to: before the first listening result sent by the UE is received, send listening configuration information to the UE, so that the UE performs interference listening on the to-be-listened-on spectrum according to the listening configuration information.

Specifically, the transmitter 63 may send the listening configuration information to the UE by using radio resource control RRC dedicated signaling, RRC broadcast signaling, Media Access Control MAC signaling, or physical layer signaling.

Optionally, to precisely narrow a spectrum resource on which the UE needs to listen, in this embodiment, description information of the to-be-listened-on spectrum may be carried in the listening configuration information. The transmitter is further configured to: before sending the listening configuration information to the UE, perform interference listening on an available spectrum to obtain a second listening result, where the available spectrum is an unlicensed spectrum that includes the to-be-listened-on spectrum; and determine the description information of the to-be-listened-on spectrum according to the second listening result.

Alternatively, the transmitter 63 is further configured to: before sending the listening configuration information to the UE, perform interference listening on an available spectrum to obtain a second listening result, where the available spectrum is an unlicensed spectrum that includes the to-be-listened-on spectrum; and the transmitter 63 is specifically configured to send, to the UE, the listening configuration information that includes the second listening result, so that the UE determines description information of the to-be-listened-on spectrum according to the second listening result.

Optionally, the listening configuration information may further include reporting configuration information used to indicate a resource occupied when the UE reports the first listening result, and the reporting configuration information includes at least one of time domain information, frequency domain information, and code domain information; and correspondingly, the processor 62 is specifically configured to receive, on the resource corresponding to the reporting configuration information, the first listening result sent by the UE.

Optionally, in this embodiment, to control interference listening of the UE, the listening configuration information may further include listening time information, and the listening time information is used to indicate a time at which the UE starts and/or stops performing interference listening on the to-be-listened-on spectrum, or the listening time information is used to instruct the UE to perform, with a period of the listening time information, interference listening on the to-be-listened-on spectrum; or
a trigger instruction is sent to the UE, so as to control interference listening of the UE, and correspondingly, the transmitter is further configured to: before the first listening result sent by the user equipment UE is received, send a trigger instruction to the UE, so that the UE starts performing interference listening on the to-be-listened-on spectrum after receiving the trigger instruction.

Alternatively, information about a listening trigger condition is carried in the listening configuration information, so as to control interference listening of the UE, and the information about the listening trigger condition is used to instruct the UE to perform interference listening on the to-be-listened-on spectrum when quality of a currently used channel meets the trigger condition.

Optionally, in this embodiment, the first listening result may be energy information of an interfering signal on the to-be-listened-on spectrum, and before receiving the first listening result sent by the UE, the processor 62 is further configured to:
send, to the UE, information about a status of using the to-be-listened-on spectrum by the current base station, where the information about a status of using includes data scheduling information corresponding to a signal sent on the to-be-listened-on spectrum by the current base station, so that the UE determines, according to the information about a status of using the to-be-listened-on spectrum by the current base station, energy information of a signal sent by the current base station, and further determines, according to energy information obtained by listening on the to-be-listened-on spectrum and the energy information of the signal sent by the current base station, the energy information of the interfering signal on the to-be-listened-on spectrum to obtain the first listening result. Correspondingly, the processor 62 is specifically configured to:
   select, from the to-be-listened-on spectrum according to the energy information of the interfering signal on the to-be-listened-on spectrum, a to-be-listened-on spectrum that meets a preset condition, where:
      the preset condition includes at least one of the following three items:
         a value of energy information of an interfering signal on a to-be-listened-on spectrum is less than a first preset value;
         a value of a signal to interference plus noise ratio SINR of a to-be-listened-on spectrum is greater than a second preset value, where the value of the SINR is a ratio of reference signal received power RSRP of a channel currently used by the UE to a value of energy information of an interfering signal on the to-be-listened-on spectrum, that is, RSRP/(N+I), or the value of the SINR is a ratio of received signal energy of a channel currently used by the UE to a value of energy information of an interfering signal on the to-be-listened-on spectrum; and
         a channel quality indicator CQI of a to-be-listened-on spectrum is greater than a third preset value, where a value of the CQI is corresponding to a ratio of RSRP of a channel currently used by the UE to a value of energy information of an interfering signal on the to-be-listened-on spectrum, or a value of the CQI is corresponding to a ratio of received signal energy of a channel currently used by the UE to a value of energy information of an interfering signal on the to-be-listened-on spectrum.

Optionally, in this embodiment, the first listening result may also be description information of an idle spectrum selected by the UE, and correspondingly, the processor 62 is specifically configured to:
determine the idle spectrum from the to-be-listened-on spectrum according to the description information of the idle spectrum selected by the UE, where the description information of the idle spectrum selected by the UE is description information of a to-be-listened-on spectrum that meets the foregoing preset condition and that is selected from the to-be-listened-on spectrum by the UE according to energy information that is of an interfering signal on the to-be-listened-on spectrum and that is obtained by performing interference listening on the to-be-listened-on spectrum.

Optionally, in specific implementation, if the memory 61, the processor 62, and the transmitter 63 are implemented separately, the memory 61, the processor 62, and the transmitter 63 may interconnect and complete communication with each other by using a bus. The bus may be an industry standard architecture (Industry Standard Architecture, ISA for short) bus, a peripheral component interconnect (Peripheral Component, PCI for short) bus, an Extended Industry Standard Architecture (Extended Industry Standard Architecture, EISA for short) bus, or the like. The bus may be classified into an address bus, a data bus, a control bus, and the like. For convenience of denotation, the bus is represented by using only one bold line in FIG. 6; however, it does not indicate that there is only one bus or only one type of buses.

Optionally, in specific implementation, if the memory 61, the processor 62, and the transmitter 63 are integrated into one chip for implementation, the memory 61, the processor 62, and the transmitter 63 may complete communication with each other through an internal interface.

### Embodiment 7

FIG. 7 is a schematic structural diagram of user equipment according to Embodiment 7 of the present invention. The user equipment in this embodiment may be configured to implement steps of the wireless communication method in Embodiment 3 of the present invention. As shown in FIG. 7, the user equipment in this embodiment includes:
a memory 71, configured to store a program, where specifically, the program may include program code, where the program code includes a computer operation instruction; and the memory 71 may include a high speed RAM memory, or may further include a non-volatile memory (non-volatile memory), for example, at least one magnetic disk memory; and
a processor 72, executing the program stored in the memory 71, so as to: perform interference listening on a to-be-listened-on spectrum to obtain a first listening result, where the to-be-listened-on spectrum belongs to an unlicensed spectrum; and send the first listening result to the base station, so that the base station selects, from the to-be-listened-on spectrum according to the first listening result, an idle spectrum to communicate with the user equipment UE.

Optionally, the user equipment in this embodiment further includes a receiver 73, configured to: before interference listening is performed on the to-be-listened-on spectrum, receive listening configuration information sent by the base station; and the processor 72 is specifically configured to perform interference listening on the to-be-listened-on spectrum according to the listening configuration information.

Optionally, description information of the to-be-listened-on spectrum may be preset on the processor 72, and the processor 72 is specifically configured to perform interference listening on the to-be-listened-on spectrum according to the preset description information of the to-be-listened-on spectrum; or
the listening configuration information includes description information of the to-be-listened-on spectrum, and correspondingly, the processor 72 is specifically configured to perform interference listening on the to-be-listened-on spectrum according to the description information that is of the to-be-listened-on spectrum and in the listening configuration information.

Alternatively, the listening configuration information includes a second listening result, the second listening result is obtained by the base station by performing listening on an available spectrum, and the available spectrum is an unlicensed spectrum that includes the to-be-listened-on spectrum; and correspondingly, the processor 72 is specifically configured to:
determine description information of the to-be-listened-on spectrum according to the second listening result in the listening configuration information; and
perform interference listening on the to-be-listened-on spectrum according to the description information of the to-be-listened-on spectrum.

Optionally, in this embodiment, the listening configuration information may further include configuration information used to indicate a resource occupied when the sending module sends the first listening result, and the configuration information includes at least one of time domain information, frequency domain information, and code domain information; and correspondingly, the processor 72 is specifically configured to send, on the resource corresponding to the configuration information, the first listening result to the base station.

Optionally, to control interference listening of the processor 72, the listening configuration information may further include listening time information; and the listening time information is used to indicate a time at which the listening module starts and/or stops performing listening on the to-be-listened-on spectrum, and the listening module is specifically configured to start and/or stop performing interference listening on the to-be-listened-on spectrum according to the listening time information; or the listening time information is used to instruct the listening module to use the listening time information as a period, and the listening module is specifically configured to perform, with a period of the listening time information, interference listening on the to-be-listened-on spectrum.

Alternatively, interference listening of the processor 72 may be controlled by using a trigger instruction sent by the base station. Specifically, before performing interference listening on the to-be-listened-on spectrum, the processor 72 is further configured to: receive the trigger instruction sent by the base station and start performing interference listening on the to-be-listened-on spectrum.

In addition, information about a trigger condition may also be preset on the processor 72, and the processor 72 performs interference listening on the to-be-listened-on spectrum when it is determined that quality of a currently used channel meets the trigger condition.

Alternatively, information about a listening trigger condition is carried in the listening configuration information, so as to control interference listening of the processor 72, and the processor 72 performs interference listening on the to-be-listened-on spectrum when it is determined that quality of a currently used channel meets the trigger condition.

Optionally, in this embodiment, the first listening result may be energy information of an interfering signal on the to-be-listened-on spectrum, and the processor 72 is further configured to: before performing listening on the to-be-listened-on spectrum, receive information that is sent by the base station and that is about a status of using the to-be-listened-on spectrum by the current base station, where the information about a status of using includes data scheduling information corresponding to a signal sent on the to-be-listened-on spectrum by the current base station; and correspondingly, the processor 72 is specifically configured to:
perform listening on a signal on the to-be-listened-on spectrum to obtain energy information of the signal on the to-be-listened-on spectrum, and determine, according to the information about a status of using the to-be-listened-on spectrum by the current base station, energy information of a signal sent by the base station; and
determine, according to the energy information of the signal on the to-be-listened-on spectrum and the energy information of the signal sent by the base station, the energy information of the interfering signal on the to-be-listened-on spectrum to obtain the first listening result.

Optionally, in this embodiment, the first listening result may also be description information of an idle spectrum selected by the processor 72, and correspondingly, the processor 72 is specifically configured to:
perform interference listening on the to-be-listened-on spectrum to obtain energy information of an interfering signal on the to-be-listened-on spectrum; and
select, from the to-be-listened-on spectrum according to the energy information of the interfering signal on the to-be-listened-on spectrum, an idle spectrum that meets a preset condition, and determine description information of the idle spectrum to obtain the first listening result, where:
   the preset condition includes at least one of the following three items:
   a value of energy information of an interfering signal on a to-be-listened-on spectrum is less than a first preset value;
   a value of a signal to interference plus noise ratio SINR of a to-be-listened-on spectrum is greater than a second preset value, where the value of the SINR is a ratio of reference signal received power RSRP of a channel currently used by the UE to a value of energy information of an interfering signal on the to-be-listened-on spectrum, that is, RSRP/(N+I), or the value of the SINR is a ratio of received signal energy of a channel currently used by the UE to a value of energy information of an interfering signal on the to-be-listened-on spectrum; and
   a channel quality indicator CQI of a to-be-listened-on spectrum is greater than a third preset value, where a value of the CQI is corresponding to a ratio of RSRP of a channel currently used by the UE to a value of energy information of an interfering signal on the to-be-listened-on spectrum, or a value of the CQI is corresponding to a ratio of received signal energy of a channel currently used by the UE to a value of energy information of an interfering signal on the to-be-listened-on spectrum.

Optionally, in specific implementation, if the memory 71, the processor 72, and the receiver 73 are implemented separately, the memory 71, the processor 72, and the receiver 73 may interconnect and complete communication with each other by using a bus. The bus may be an industry standard architecture (Industry Standard Architecture, ISA for short) bus, a peripheral component interconnect (Peripheral Component, PCI for short) bus, an Extended Industry Standard Architecture (Extended Industry Standard Architecture, EISA for short) bus, or the like. The bus may be classified into an address bus, a data bus, a control bus, and the like. For convenience of denotation, the bus is represented by using only one bold line in FIG. 6; however, it does not indicate that there is only one bus or only one type of buses.

Optionally, in specific implementation, if the memory 71, the processor 72, and the receiver 73 are integrated into one chip for implementation, the memory 71, the processor 72, and the receiver 73 may complete communication with each other through an internal interface.

It should be noted that, for ease of description, the foregoing method embodiments are described as a series of action combinations. However, persons skilled in the art should understand that the present invention is not limited to the described sequence of the actions, because some steps may be performed in another sequence or performed at the same time according to the present invention. In addition, persons skilled in the art should also understand that the embodiments described in this specification all belong to exemplary embodiments, and the involved actions and modules are not necessarily mandatory to the present invention.

Persons of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A listening configuration method, comprising:
generating, by a base station, listening configuration information, wherein the listening configuration information is used to configure user equipment UE to perform interference listening, the interference listening refers to energy detection on a to-be-listened-on spectrum, and the to-be-listened-on spectrum belongs to an unlicensed spectrum; and
sending, by the base station, the listening configuration information to the UE, wherein
the base station can use the unlicensed spectrum to communicate with the UE.

2. The method according to claim 1, wherein the listening configuration information comprises description information of the to-be-listened-on spectrum, and the description information of the to-be-listened-on spectrum comprises time domain information and/or frequency domain information of the to-be-listened-on spectrum, so that the UE performs interference listening on the to-be-listened-on spectrum according to the description information of the to-be-listened-on spectrum.

3. The method according to claim 1, wherein the listening configuration information comprises a second listening result obtained by the base station by listening on an available spectrum, so that the UE determines description information of the to-be-listened-on spectrum according to the second listening result, and the available spectrum is an unlicensed spectrum that comprises the to-be-listened-on spectrum.

4. The method according to any one of claims 1 to 3, wherein the listening configuration information comprises reporting configuration information used to indicate a resource occupied when the UE reports a first listening result, and the reporting configuration information comprises at least one of time domain information, frequency domain information, and code domain information.

5. The method according to any one of claims 1 to 4, wherein the listening configuration information further comprises listening time information; and
the listening time information is used to indicate a time at which the UE starts and/or stops performing interference listening on the to-be-listened-on spectrum; or
the listening time information is used to instruct the UE to perform, with a period of the listening time information, interference listening on the to-be-listened-on spectrum.

6. The method according to any one of claims 1 to 4, wherein the listening configuration information further comprises information about a listening trigger condition, and the information about the listening trigger condition is used to instruct the UE to perform interference listening on the to-be-listened-on spectrum when quality of a currently used channel meets the trigger condition.

7. A wireless communication method, comprising:
receiving a first listening result sent by user equipment UE, wherein the first listening result is obtained by the UE by performing interference listening on a to-be-listened-on spectrum, and the to-be-listened-on spectrum is an unlicensed spectrum;
selecting an idle spectrum from the to-be-listened-on spectrum according to the first listening result; and
communicating with the UE on the idle spectrum.

8. The method according to claim 7, wherein before the receiving a first listening result sent by the UE, the method further comprises:
sending listening configuration information to the UE, so that the UE performs interference listening on the to-be-listened-on spectrum according to the listening configuration information.

9. The method according to claim 8, wherein the sending listening configuration information to the UE comprises:
sending the listening configuration information to the UE by using radio resource control RRC dedicated signaling, RRC broadcast signaling, Media Access Control MAC signaling, or physical layer signaling.

10. The method according to claim 8 or 9, wherein the listening configuration information comprises description information of the to-be-listened-on spectrum; and
before the sending listening configuration information to the UE, the method further comprises:
performing interference listening on an available spectrum to obtain a second listening result, wherein the available spectrum is an unlicensed spectrum that comprises the to-be-listened-on spectrum; and
determining the description information of the to-be-listened-on spectrum according to the second listening result.

11. The method according to claim 8 or 9, wherein before the sending listening configuration information to the UE, the method further comprises:
performing interference listening on an available spectrum to obtain a second listening result, wherein the available spectrum is an unlicensed spectrum that comprises the to-be-listened-on spectrum; and
the sending listening configuration information to the UE, so that the UE performs interference listening on the to-be-listened-on spectrum according to the listening configuration information comprises:
sending, to the UE, the listening configuration information that comprises the second listening result, so that the UE determines description information of the to-be-listened-on spectrum according to the second listening result.

12. The method according to any one of claims 8 to 11, wherein the listening configuration information comprises reporting configuration information used to indicate a resource occupied when the UE reports the first listening result, and the reporting configuration information comprises at least one of time domain information, frequency domain information, and code domain information; and
the receiving a first listening result sent by the UE comprises:
receiving, on the resource corresponding to the reporting configuration information, the first listening result sent by the UE.

13. The method according to any one of claims 8 to 12, wherein the listening configuration information comprises listening time information, and the listening time information is used to indicate a time at which the UE starts and/or stops performing interference listening on the to-be-listened-on spectrum, or the listening time information is used to instruct the UE to perform, with a period of the listening time information, interference listening on the to-be-listened-on spectrum;
or
before the receiving a first listening result sent by user equipment UE, the method further comprises:
sending a trigger instruction to the UE, so that the UE starts performing interference listening on the to-be-listened-on spectrum after receiving the trigger instruction.

14. The method according to any one of claims 8 to 12, wherein the listening configuration information further comprises information about a listening trigger condition, and the information about the listening trigger condition is used to instruct the UE to perform interference listening on the to-be-listened-on spectrum when quality of a currently used channel meets the trigger condition.

15. The method according to any one of claims 7 to 14, wherein the first listening result is energy information of an interfering signal on the to-be-listened-on spectrum; and
before the receiving a first listening result sent by user equipment UE, the method further comprises:
sending, to the UE, information about a status of using the to-be-listened-on spectrum by a current base station, wherein the information about a status of using comprises data scheduling information corresponding to a signal sent on the to-be-listened-on spectrum by the current base station, so that the UE determines, according to the information about a status of using the to-be-listened-on spectrum by the current base station, energy information of a signal sent by the current base station, and further determines, according to energy information obtained by listening on the to-be-listened-on spectrum and the energy information of the signal sent by the current base station, the energy information of the interfering signal on the to-be-listened-on spectrum to obtain the first listening result.

16. The method according to claim 15, wherein the selecting an idle spectrum from the to-be-listened-on spectrum according to the first listening result comprises:
selecting, from the to-be-listened-on spectrum according to the energy information of the interfering signal on the to-be-listened-on spectrum, a to-be-listened-on spectrum that meets a preset condition, wherein:
the preset condition comprises at least one of the following three items:
a value of energy information of an interfering signal on a to-be-listened-on spectrum is less than a first preset value;
a value of a signal to interference plus noise ratio SINR of a to-be-listened-on spectrum is greater than a second preset value, wherein the value of the SINR is a ratio of reference signal received power RSRP of a channel currently used by the UE to a value of energy information of an interfering signal on the to-be-listened-on spectrum; and
a channel quality indicator CQI of a to-be-listened-on spectrum is greater than a third preset value, wherein a value of the CQI is corresponding to a ratio of RSRP of a channel currently used by the UE to a value of energy information of an interfering signal on the to-be-listened-on spectrum.

17. The method according to claims 7 to 14, wherein the first listening result is description information of an idle spectrum selected by the UE, and the selecting an idle spectrum from the to-be-listened-on spectrum according to the first listening result comprises:
determining the idle spectrum from the to-be-listened-on spectrum according to the description information of the idle spectrum selected by the UE, wherein:
the description information of the idle spectrum selected by the UE is description information of a to-be-listened-on spectrum that meets a preset condition and that is selected from the to-be-listened-on spectrum by the UE according to energy information that is of an interfering signal on the to-be-listened-on spectrum and that is obtained by performing interference listening on the to-be-listened-on spectrum, and the preset condition comprises at least one of the following three items:
a value of energy information of an interfering signal on a to-be-listened-on spectrum is less than a first preset value;
a value of a signal to interference plus noise ratio SINR of a to-be-listened-on spectrum is greater than a second preset value, wherein the value of the SINR is a ratio of reference signal received power RSRP of a channel currently used by the UE to a value of energy information of an interfering signal on the to-be-listened-on spectrum; and
a channel quality indicator CQI of a to-be-listened-on spectrum is greater than a third preset value, wherein a value of the CQI is corresponding to a ratio of RSRP of a channel currently used by the UE to a value of energy information of an interfering signal on the to-be-listened-on spectrum.

18. A wireless communication method, comprising:
performing, by user equipment UE, interference listening on a to-be-listened-on spectrum to obtain a first listening result, wherein the to-be-listened-on spectrum belongs to an unlicensed spectrum; and
sending, by the UE, the first listening result to the base station, so that the base station selects, from the to-be-listened-on spectrum according to the first listening result, an idle spectrum to communicate with the UE.

19. The method according to claim 18, wherein before the performing, by UE, interference listening on a to-be-listened-on spectrum, the method further comprises:
receiving, by the user equipment UE, listening configuration information sent by the base station; and
the performing, by UE, interference listening on a to-be-listened-on spectrum comprises:
performing, by the UE, interference listening on the to-be-listened-on spectrum according to the listening configuration information.

20. The method according to claim 19, wherein description information of the to-be-listened-on spectrum is preset on the UE, and the performing, by the UE, interference listening on the to-be-listened-on spectrum according to the listening configuration information comprises:
performing, by the UE, interference listening on the to-be-listened-on spectrum according to the preset description information of the to-be-listened-on spectrum; or
the listening configuration information comprises description information of the to-be-listened-on spectrum, and the performing, by the UE, interference listening on the to-be-listened-on spectrum according to the listening configuration information comprises:
performing, by the UE, interference listening on the to-be-listened-on spectrum according to the description information that is of the to-be-listened-on spectrum and in the listening configuration information.

21. The method according to claim 19, wherein the listening configuration information comprises a second listening result, the second listening result is obtained by the base station by listening on an available spectrum, and the available spectrum is an unlicensed spectrum that comprises the to-be-listened-on spectrum; and
the performing, by the UE, listening on the to-be-listened-on spectrum according to the listening configuration information comprises:
determining, by the UE, description information of the to-be-listened-on spectrum according to the second listening result in the listening configuration information; and
performing, by the UE, interference listening on the to-be-listened-on spectrum according to the description information of the to-be-listened-on spectrum.

22. The method according to any one of claims 19 to 21, wherein the listening configuration information further comprises configuration information used to indicate a resource occupied when the UE sends the first listening result, and the configuration information comprises at least one of time domain information, frequency domain information, and code domain information; and
the sending, by the UE, the first listening result to the base station specifically comprises:
sending, by the UE on the resource corresponding to the configuration information, the first listening result to the base station.

23. The method according to any one of claims 19 to 22, wherein the listening configuration information further comprises listening time information; and
the listening time information is used to indicate a time at which the UE starts and/or stops performing listening on the to-be-listened-on spectrum, and the performing, by the UE, listening on the to-be-listened-on spectrum according to the listening configuration information comprises: starting and/or stopping performing, by the UE, interference listening on the to-be-listened-on spectrum according to the listening time information; or
the listening time information is used to instruct the UE to use the listening time information as a period, and the performing, by the UE, listening on the to-be-listened-on spectrum according to the listening configuration information comprises: performing, by the UE with a period of the listening time information, interference listening on the to-be-listened-on spectrum.

24. The method according to any one of claims 19 to 22, wherein before the performing, by UE, interference listening on a to-be-listened-on spectrum, the method further comprises:
receiving, by the UE, a trigger instruction sent by the base station and starting performing interference listening on the to-be-listened-on spectrum.

25. The method according to any one of claims 19 to 22, wherein the listening configuration information further comprises information about a listening trigger condition; and
the performing, by the UE, listening on the to-be-listened-on spectrum according to the listening configuration information comprises:
performing, by the UE when determining that quality of a currently used channel meets the trigger condition, interference listening on the to-be-listened-on spectrum.

26. The method according to any one of claims 18 to 25, wherein the first listening result is energy information of an interfering signal on the to-be-listened-on spectrum, and before the performing, by user equipment UE, listening on a to-be-listened-on spectrum, the method further comprises:
receiving information that is sent by the base station and that is about a status of using the to-be-listened-on spectrum by the current base station, wherein the information about a status of using comprises data scheduling information corresponding to a signal sent on the to-be-listened-on spectrum by the current base station; and
the performing, by UE, interference listening on a to-be-listened-on spectrum to obtain a first listening result comprises:
performing, by the UE, listening on a signal on the to-be-listened-on spectrum to obtain energy information of the signal on the to-be-listened-on spectrum, and determining, according to the information about a status of using the to-be-listened-on spectrum by the current base station, energy information of a signal sent by the base station; and
determining, by the UE according to the energy information of the signal on the to-be-listened-on spectrum and the energy information of the signal sent by the base station, the energy information of the interfering signal on the to-be-listened-on spectrum to obtain the first listening result.

27. The method according to any one of claims 18 to 25, wherein the first listening result is description information of an idle spectrum selected by the UE, and the performing, by UE, interference listening on a to-be-listened-on spectrum to obtain a first listening result comprises:
performing, by the UE, interference listening on the to-be-listened-on spectrum to obtain energy information of an interfering signal on the to-be-listened-on spectrum; and
selecting, by the UE from the to-be-listened-on spectrum according to the energy information of the interfering signal on the to-be-listened-on spectrum, an idle spectrum that meets a preset condition, and determining description information of the idle spectrum to obtain the first listening result, wherein:
the preset condition comprises at least one of the following three items:
a value of energy information of an interfering signal on a to-be-listened-on spectrum is less than a first preset value;
a value of a signal to interference plus noise ratio SINR of a to-be-listened-on spectrum is greater than a second preset value, wherein the value of the SINR is a ratio of reference signal received power RSRP of a channel currently used by the UE to a value of energy information of an interfering signal on the to-be-listened-on spectrum; and
a channel quality indicator CQI of a to-be-listened-on spectrum is greater than a third preset value, wherein a value of the CQI is corresponding to a ratio of RSRP of a channel currently used by the UE to a value of energy information of an interfering signal on the to-be-listened-on spectrum.

28. A wireless communication apparatus, comprising:
a receiving module, configured to receive a first listening result sent by user equipment UE, wherein the first listening result is obtained by the UE by performing interference listening on a to-be-listened-on spectrum, and the to-be-listened-on spectrum is an unlicensed spectrum;
a selection module, configured to select an idle spectrum from the to-be-listened-on spectrum according to the first listening result; and
a communication module, configured to communicate with the UE on the idle spectrum.

29. The apparatus according to claim 28, wherein the apparatus further comprises a first sending module, configured to: before the first listening result sent by the UE is received, send listening configuration information to the UE, so that the UE performs interference listening on the to-be-listened-on spectrum according to the listening configuration information.

30. The apparatus according to claim 29, wherein the first sending module is specifically configured to send the listening configuration information to the UE by using radio resource control RRC dedicated signaling, RRC broadcast signaling, Media Access Control MAC signaling, or physical layer signaling.

31. The apparatus according to claim 29 or 30, wherein the listening configuration information comprises description information of the to-be-listened-on spectrum; and
before sending the listening configuration information to the UE, the first sending module is further configured to:
perform interference listening on an available spectrum to obtain a second listening result, wherein the available spectrum is an unlicensed spectrum that comprises the to-be-listened-on spectrum; and
determine the description information of the to-be-listened-on spectrum according to the second listening result.

32. The apparatus according to claim 29 or 30, wherein before sending the listening configuration information to the UE, the first sending module is further configured to:
perform interference listening on an available spectrum to obtain a second listening result, wherein the available spectrum is an unlicensed spectrum that comprises the to-be-listened-on spectrum; and
the first sending module is specifically configured to send, to the UE, the listening configuration information that comprises the second listening result, so that the UE determines description information of the to-be-listened-on spectrum according to the second listening result.

33. The apparatus according to any one of claims 29 to 32, wherein the listening configuration information comprises reporting configuration information used to indicate a resource occupied when the UE reports the first listening result, and the reporting configuration information comprises at least one of time domain information, frequency domain information, and code domain information; and
the receiving module is specifically configured to:
receive, on the resource corresponding to the reporting configuration information, the first listening result sent by the UE.

34. The apparatus according to any one of claims 29 to 33, wherein the listening configuration information comprises listening time information, and the listening time information is used to indicate a time at which the UE starts and/or stops performing interference listening on the to-be-listened-on spectrum, or the listening time information is used to instruct the UE to perform, with a period of the listening time information, interference listening on the to-be-listened-on spectrum;
or
before receiving the first listening result sent by the UE, the receiving module is further configured to:
send a trigger instruction to the UE, so that the UE starts performing interference listening on the to-be-listened-on spectrum after receiving the trigger instruction.

35. The apparatus according to any one of claims 29 to 33, wherein the listening configuration information further comprises information about a listening trigger condition, and the information about the listening trigger condition is used to instruct the UE to perform interference listening on the to-be-listened-on spectrum when quality of a currently used channel meets the trigger condition.

36. The apparatus according to any one of claims 28 to 35, wherein the first listening result is energy information of an interfering signal on the to-be-listened-on spectrum; and
the apparatus further comprises a second sending module, configured to: before the first listening result sent by the user equipment UE is received, send, to the UE, information about a status of using the to-be-listened-on spectrum by a current base station, wherein the information about a status of using comprises data scheduling information corresponding to a signal sent on the to-be-listened-on spectrum by the current base station, so that the UE determines, according to the information about a status of using the to-be-listened-on spectrum by the current base station, energy information of a signal sent by the current base station, and further determines, according to energy information obtained by listening on the to-be-listened-on spectrum and the energy information of the signal sent by the current base station, the energy information of the interfering signal on the to-be-listened-on spectrum to obtain the first listening result.

37. The apparatus according to claim 36, wherein the selection module is specifically configured to select, from the to-be-listened-on spectrum according to the energy information of the interfering signal on the to-be-listened-on spectrum, a to-be-listened-on spectrum that meets a preset condition, wherein:
the preset condition comprises at least one of the following three items:
a value of energy information of an interfering signal on a to-be-listened-on spectrum is less than a first preset value;
a value of a signal to interference plus noise ratio SINR of a to-be-listened-on spectrum is greater than a second preset value, wherein the value of the SINR is a ratio of reference signal received power RSRP of a channel currently used by the UE to a value of energy information of an interfering signal on the to-be-listened-on spectrum; and
a channel quality indicator CQI of a to-be-listened-on spectrum is greater than a third preset value, wherein a value of the CQI is corresponding to a ratio of RSRP of a channel currently used by the UE to a value of energy information of an interfering signal on the to-be-listened-on spectrum.

38. The apparatus according to claims 28 to 35, wherein the first listening result is description information of an idle spectrum selected by the UE, and the selection module is specifically configured to:
determine the idle spectrum from the to-be-listened-on spectrum according to the description information of the idle spectrum selected by the UE, wherein:
the description information of the idle spectrum selected by the UE is description information of a to-be-listened-on spectrum that meets a preset condition and that is selected from the to-be-listened-on spectrum by the UE according to energy information that is of an interfering signal on the to-be-listened-on spectrum and that is obtained by performing interference listening on the to-be-listened-on spectrum, and the preset condition comprises at least one of the following three items:
a value of energy information of an interfering signal on a to-be-listened-on spectrum is less than a first preset value;
a value of a signal to interference plus noise ratio SINR of a to-be-listened-on spectrum is greater than a second preset value, wherein the value of the SINR is a ratio of reference signal received power RSRP of a channel currently used by the UE to a value of energy information of an interfering signal on the to-be-listened-on spectrum; and
a channel quality indicator CQI of a to-be-listened-on spectrum is greater than a third preset value, wherein a value of the CQI is corresponding to a ratio of RSRP of a channel currently used by the UE to a value of energy information of an interfering signal on the to-be-listened-on spectrum.

39. A wireless communication apparatus, comprising:
a listening module, configured to perform interference listening on a to-be-listened-on spectrum to obtain a first listening result, wherein the to-be-listened-on spectrum belongs to an unlicensed spectrum; and
a sending module, configured to send the first listening result to the base station, so that the base station selects, from the to-be-listened-on spectrum according to the first listening result, an idle spectrum to communicate with user equipment UE.

40. The apparatus according to claim 39, wherein the apparatus further comprises:
a receiving module, configured to: before interference listening is performed on the to-be-listened-on spectrum, receive listening configuration information sent by the base station; and
the listening module is specifically configured to perform interference listening on the to-be-listened-on spectrum according to the listening configuration information.

41. The apparatus according to claim 40, wherein description information of the to-be-listened-on spectrum is preset on the listening module, and the listening module is specifically configured to perform interference listening on the to-be-listened-on spectrum according to the preset description information of the to-be-listened-on spectrum; or
the listening configuration information comprises description information of the to-be-listened-on spectrum, and the listening module is specifically configured to perform interference listening on the to-be-listened-on spectrum according to the description information that is of the to-be-listened-on spectrum and in the listening configuration information.

42. The apparatus according to claim 40, wherein the listening configuration information comprises a second listening result, the second listening result is obtained by the base station by listening on an available spectrum, and the available spectrum is an unlicensed spectrum that comprises the to-be-listened-on spectrum; and
the listening module is specifically configured to:
determine description information of the to-be-listened-on spectrum according to the second listening result in the listening configuration information; and
perform interference listening on the to-be-listened-on spectrum according to the description information of the to-be-listened-on spectrum.

43. The apparatus according to any one of claims 40 to 42, wherein the listening configuration information further comprises configuration information used to indicate a resource occupied when the sending module sends the first listening result, and the configuration information comprises at least one of time domain information, frequency domain information, and code domain information; and
the sending module is specifically configured to send, on the resource corresponding to the configuration information, the first listening result to the base station.

44. The apparatus according to any one of claims 40 to 43, wherein the listening configuration information further comprises listening time information; and
the listening time information is used to indicate a time at which the listening module starts and/or stops performing listening on the to-be-listened-on spectrum, and the listening module is specifically configured to start and/or stop performing interference listening on the to-be-listened-on spectrum according to the listening time information; or
the listening time information is used to instruct the listening module to use the listening time information as a period, and the listening module is specifically configured to perform, with a period of the listening time information, interference listening on the to-be-listened-on spectrum.

45. The apparatus according to any one of claims 40 to 43, wherein before performing interference listening on the to-be-listened-on spectrum, the listening module is further configured to: receive a trigger instruction sent by the base station and start performing interference listening on the to-be-listened-on spectrum.

46. The apparatus according to any one of claims 40 to 43, wherein the listening configuration information further comprises information about a listening trigger condition; and
the listening module is specifically configured to: when it is determined that quality of a currently used channel meets the trigger condition, perform interference listening on the to-be-listened-on spectrum.

47. The apparatus according to any one of claims 39 to 46, wherein the first listening result is energy information of an interfering signal on the to-be-listened-on spectrum, and before performing listening on the to-be-listened-on spectrum, the listening module is further configured to:
receive information that is sent by the base station and that is about a status of using the to-be-listened-on spectrum by the current base station, wherein the information about a status of using comprises data scheduling information corresponding to a signal sent on the to-be-listened-on spectrum by the current base station; and
the listening module is specifically configured to:
perform listening on a signal on the to-be-listened-on spectrum to obtain energy information of the signal on the to-be-listened-on spectrum, and determine, according to the information about a status of using the to-be-listened-on spectrum by the current base station, energy information of a signal sent by the base station; and
determine, according to the energy information of the signal on the to-be-listened-on spectrum and the energy information of the signal sent by the base station, the energy information of the interfering signal on the to-be-listened-on spectrum to obtain the first listening result.

48. The apparatus according to any one of claims 39 to 46, wherein the first listening result is description information of an idle spectrum selected by the listening module, and the listening module is specifically configured to:
perform interference listening on the to-be-listened-on spectrum to obtain energy information of an interfering signal on the to-be-listened-on spectrum; and
select, from the to-be-listened-on spectrum according to the energy information of the interfering signal on the to-be-listened-on spectrum, an idle spectrum that meets a preset condition, and determine description information of the idle spectrum to obtain the first listening result, wherein:
the preset condition comprises at least one of the following three items:
a value of energy information of an interfering signal on a to-be-listened-on spectrum is less than a first preset value;
a value of a signal to interference plus noise ratio SINR of a to-be-listened-on spectrum is greater than a second preset value, wherein the value of the SINR is a ratio of reference signal received power RSRP of a channel currently used by the UE to a value of energy information of an interfering signal on the to-be-listened-on spectrum; and
a channel quality indicator CQI of a to-be-listened-on spectrum is greater than a third preset value, wherein a value of the CQI is corresponding to a ratio of RSRP of a channel currently used by the UE to a value of energy information of an interfering signal on the to-be-listened-on spectrum.
